# EUROPÄISCHE PATENTSCHRIFT

(11) **EP 0 863 690 B1**
(45) Veröffentlichungstag und Bekanntmachung des Hinweises auf die Patenterteilung: **02.05.2002**
(21) Anmeldenummer: 98102752.7
(22) Anmeldetag: 18.02.1998
(51) Int. Cl.: H02M 3/338, H02M 7/5383, H05B 41/282

(54) **Freischwingende Schaltungsanordnung**
Self oscillating circuit
Circuit auto-oscillant

(30) Priorität: 07.03.1997 DE 19709545
(43) Veröffentlichungstag der Anmeldung: 09.09.1998
(73) Patentinhaber: Patent-Treuhand-Gesellschaft für elektrische Glühlampen mbH, 81543 München (DE)
(72) Erfinder: Reiser, Ludwig, 86368 Gersthofen (DE)

(56) Entgegenhaltungen:
- DE-A- 4 129 430

## Beschreibung

Die Erfindung betrifft eine Schaltung zum Betreiben einer Last, wie z.B. einer Niederdruckentladungslampe, gemäß dem Oberbegriff des Patentanspruchs 1.

Insbesondere handelt es sich um eine Betriebsschaltung für Leistungsbereiche bis zu einigen zehn Watt, bei denen vor allem die Kosten im Vordergrund stehen, wie z.B. Kleinnetzteile und besonders auch elektronische Vorschaltgeräte (EVG) für Kompaktleuchtstofflampen (KLL).

Bei solchen Schaltungen müssen die Schaltelemente mit einer Ansteuerleistung im Takt der Schaltfrequenz versorgt werden. Die bekannten Anordnungen benutzen hierzu beispielsweise separate Stromwandler, wie im Buch "Elektronikschaltungen" von W. Hirschmann (Siemens AG, 1982) auf den Seiten 148 und 150 gezeigt, oder sie greifen über Zusatzwicklungen auf der Resonanzdrossel oder dem Leistungsübertrager Steuerenergie ab und formen sie in einem Impulsformungs- und Phasenschiebernetzwerk entsprechend nach (siehe deutsche Offenlegung DE 4129 430). Natürlich kann auch eine Frequenz- oder Pulsweitensteuerung, vorzugsweise integriert in einem Steuer-IC, verwendet werden.

Nachteilig bei solchen Steuerungen ist jedoch der Aufwand in Form eigener Wickelgüter oder zusätzlicher Wicklungen auf bestehenden Induktivitäten oder aufwendiger und teurer Steuer-ICs mit Hilfsstromversorgung usw., der die Kosten gerade bei kleinen Leistungen empfindlich beeinflußt, da der Preis der Steuerung im Gegensatz zu den Leistungselementen auch bei nur einigen Watt übertragener Leistung praktisch genauso hoch ist wie für einige hundert Watt.

Der Erfindung liegt das technische Problem zugrunde, die eingangs bezeichnete Schaltung hinsichtlich einer einfacheren und kostengünstigeren Herstellung zu verbessern.

Das Problem wird durch die kennzeichnenden Merkmale des Anspruchs 1 gelöst. Weitere vorteilhafte Merkmale der Schaltungsanordnung sind den Unteransprüchen zu entnehmen.

Die Erfindung geht von der Idee aus, den Freilaufstrom, der während des nichtleitenden Zustands des Schaltelements antiparallel zu dem Strom durch das Schaltelement in seinem leitenden Zustand fließt, als Energiequelle zum Steuern des Schaltelements in den leitenden Zustand zu verwenden. Dies kann dadurch geschehen, daß der Weg des Freilaufstromes, etwa über eine Freilaufdiode, blockiert wird und z.B. über eine in die Freilaufstrecke eingefügte Zenerdiode ein Spannungsabfall erzeugt wird, der dann als anregender Puls in Länge der Freilaufzeit und Höhe der Zenerspannung über ein Strom- oder Ladungsspeicherelement solange im Abklingen verzögert wird, wie die Aktivierung des der Freilaufdiode parallelen Schaltelementes andauern soll.

Es ist jedoch bei dieser Erfindung in verschiedener Weise - wie zur Veranschaulichung im folgenden gezeigt - möglich, den in der Betriebsschaltung mit Leistungsschaltelement ohnehin vorhandenen Freilaufstrom in geschickter, d.h. einfacher und kostengünstiger Weise, zur Steuerung des oder auch der Leistungsschaltelemente zu nutzen.

Der Begriff "Energie" steht in seiner Allgemeinheit hier zwar einerseits für die physikalische Größe "Energie", darüber hinaus jedoch auch stellvertretend etwa für die Spannung zur Steuerung eines FET, für einen Strom oder eine Ladung zur Steuerung eines Bipolartransistors usw.. Jedenfalls kann die für die Ansteuerung eines Leistungsschaltelements geeignete elektrische Größe wie in den Ausführungsbeispielen oder in anderer dem Fachmann bekannter Weise aus dem Freilaufstrom gewonnen werden.

Die Anwendbarkeit der gezeigten Steuerung für die Schaltelemente ist natürlich nicht auf Halbbrücken und EVG beschränkt, sie läßt sich auch verwenden für Vollbrücken, Push-Pull-Gegentaktwandler, auch Eintaktwandler wie Ein-Transistorlösungen oder asymmetrische Halbbrücken.

Die Last muß nicht zwangsläufig in einen Reihenresonanzkreis eingefügt werden, sie kann auch transformatorisch eingekoppelt sein mit sekundärseitiger Gleichrichtung, wie bei Netzteilen üblich.

Statt der einfachen Gleichrichterschaltung mit Siebung als Eingangskreis ist auch die Kombination mit Schaltungen zur Reduzierung von Netzstromoberschwingungen möglich.

Als Schaltelemente kommen auch P-Kanal- oder pnp-Schalttransistoren - auch in Kombination mit den hier nachfolgend benutzten N-Kanal- bzw. npn- Schalttransistoren - in Frage.

Auch können natürlich verschiedene Ausführungsformen, wie die nachfolgend beispielhaft ausgeführten, miteinander kombiniert werden.

Wesentlich ist nur, daß vor der Aktivierung des/der Schaltelemente eine Freilaufphase durch eine antiparallel wirkende Freilaufstrecke, etwa eine antiparallel liegende Freilaufdiode, existiert.

Bei transformatorischer Einkopplung einer Last wie einer Sekundärgleichrichterschaltung oder einer Niedervolthalogenlampe ohne eine dazu seriell geschaltete Induktivität (bis auf die parasitär vorhandene, jedoch klein gehaltene Streuinduktivität) kann der für eine ausreichende Freilaufphase einzuprägende Strom in einer lastparallelen Induktivität gespeichert werden. Um eine zusätzliche Drossel zu vermeiden, kann dazu auch der Trafo mit Luftspalt ausgeführt werden, um durch den so erhöhten Magnetisierungsstrom ausreichend Freilaufstrom nach Abschalten eines Schaltelementes zu gewährleisten.

Der Schwerpunkt der folgenden Ausführungsbeispiele liegt jedoch bei Halbbrücken mit Serienresonanzkreis, da sie sich sehr gut zum Einsatz in EVG für KLL eignen.

Zur Illustration verschiedener Möglichkeiten der Verschaltung im Bereich der Lampe und des Resonanzkreises sind die verschiedenen Ausführungsbeispiele auch in diesem Bereich unterschiedlich gestaltet. Dies steht jedoch in keinem zwingenden Zusammenhang mit den Unterschieden zwischen den jeweiligen erfindungsgemäßen Freilaufsteuerungsschaltungen. Vielmehr sind diese Varianten praktisch beliebig kombinierbar; ihre exemplarische Darstellung dient dazu, zu verdeutlichen, daß der Gegenstand der Erfindung auf keine spezielle Verschaltung außerhalb der Freilaufsteuerungsschaltung eingeschränkt ist.

### Ausführungsbeispiele

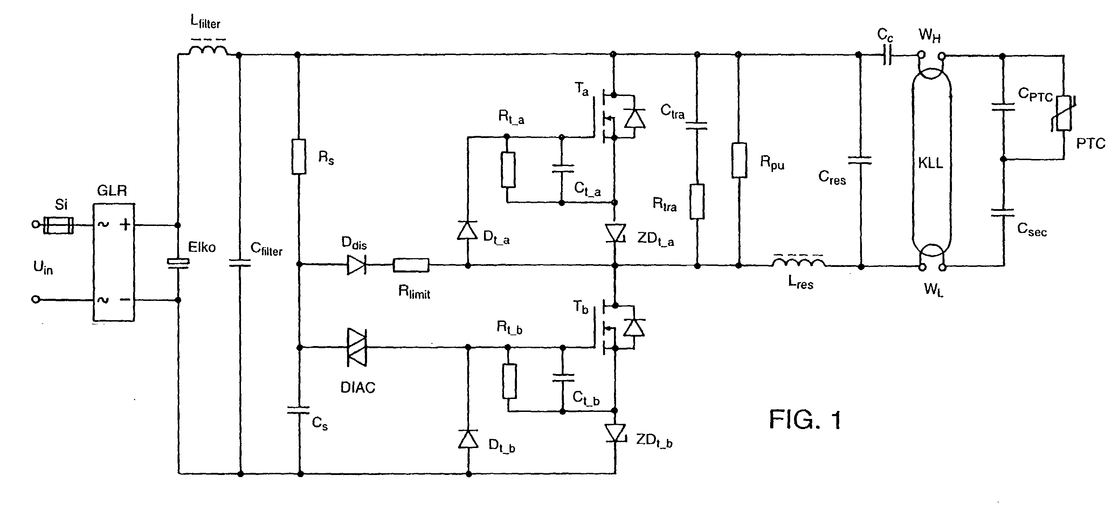

Im folgenden wird die Funktion der Schaltung anhand eines EVG für eine KLL von 15W in Form einer resonanten Halbbrückenschaltung mit MOSFET-Schalttransistoren (kurz: FET) beschrieben, welche als Nullspannungsschalter arbeiten. Statt der FET können in Fig. 1 bis 9 auch IGBT (Isolated Gate Bipolar Transistor, eine Kombination aus MOSFET und Bipolartransistor) mit entsprechender Spannungs- und Strombelastbarkeit verwendet werden.

Fig. 1: Die Wechselspannung des Versorgungsnetzes wird über eine Sicherung Si an den Gleichrichter GLR gelegt, die dadurch erzeugte Gleichspannung mit Hilfe eines Elektrolytkondensators Elko geglättet. Bei ausschließlicher Speisung aus einer Gleichspannungsquelle, wie einer Batterie, kann dieser Eingangsteil entfallen. Durch eine Stabkerndrossel L_{filter} und einen nachgeschalteten Folienkondensator C_{filter} läßt sich eine ausreichend gute Funkentstörung der Gesamtanordnung erzielen.

Nun wird nach Anlegen der Versorgungsspannung zur Erzeugung eines erstmaligen Startpulses durch eine Monoflop-Funktion zuerst ein Startkondensator Cₛ durch einen hochohmigen Widerstand Rₛ aus der Versorgungsspannung aufgeladen. Gleichzeitig kann durch einen "Pull-Up"-Widerstand Rₚᵤ parallel zum oberen Transistor Tₐ eine günstige Ausgangslage zum Start bei z.B. Leckströmen des unteren Transistors T_{b} oder zur Wiederherstellung der Ausgangsposition nach einem mißlungenen Startversuch geschaffen werden. Sobald die Spannung am Startkondensator die Schwellspannung des DIAC plus der Vorwärts-Flußspannung der unteren Zenerdiode ZD_{t_b} erreicht, schaltet dieser durch und ergießt einen Teil der Ladung von Cₛ in den Gate-Kondensator C_{t_b} von T_{b}, wodurch T_{b} erstmalig aktiviert wird und eine resonante Schwingung im Lastkreis einsetzt. Gleichzeitig beginnt T_{b} auch Cₛ über die Entladediode D_{dis} und den Begrenzungswiderstand Rₗᵢₘᵢₜ zu entladen.

Wäre Rₗᵢₘᵢₜ nicht vorhanden, so würde T_{b} den Startkondensator Cₛ schon kurz nach Überschreiten seiner Schwellspannung über D_{dis} vollständig entladen und in C_{t_b} würden so nur etwa 4V gespeichert. Bei einem EVG beispielsweise mit Stromwandlersteuerung würde zwar der einsetzende Resonanzstrom sofort mitkoppelnd wirken und dadurch auch bei einer schwachen Erst-Ansteuerung noch sicher anschwingen. Hier jedoch muß bereits der erste Puls in Größe und Dauer den später vom Freilauf generierten Steuersignalen nahekommen, da keine weiteren Mitkopplungen aus der Schaltung Steuerenergie bereitstellen.

Beginnend mit dem Ende des DIAC-Pulses wird C_{t_b} über R_{t_b} entladen, T_{b} schaltet nach Unterschreiten der Schwellspannung ab. In der Resonanzdrossel Lᵣₑₛ ist bereits ein Strom eingeprägt. Er floß während der Aktivierung von T_{b} in der gezeigten EVG-Schaltung mit Vorheizung von der Plus-Versorgung parallel über Cᵣₑₛ wie auch durch die Serienschaltung aus Auskoppelkondensator C_{c}, die obere Wendel W_{H} der KLL, den Kaltleiter PTC parallel zum Kondensator C_{PTC}, den Kondensator C_{sec}, die untere Wendel W_{L} der KLL zum Verknüpfungspunkt mit Cᵣₑₛ, über Lᵣₑₛ, T_{b} und ZD_{t_b} zu Versorgung-Minus.

Nach Abschalten von T_{b} wird zunächst der Trapezkondensator Cₜᵣₐ über einen Bedämpfungswiderstand Rₜᵣₐ umgeladen, bevor der in Lᵣₑₛ eingeprägte Strom einen Freilaufweg über die in Tₐ enthaltene Freilaufdiode sucht. Rₜᵣₐ unterdrückt hochfrequente Oszillationen im vorliegenden Aufbau und ist nicht zwingend erforderlich. Der Weg des Freilaufstromes ist jedoch versperrt durch die in die Source-Leitung von Tₐ eingefügte Zenerdiode ZD_{t_a}, so daß er über die Diode D_{t_a} und die Parallelschaltung aus C_{t_a} und R_{t_a} fließen muß und dabei C_{t_a} auflädt, bevor er über die Transistor-antiparallele Freilaufdiode zum Verknüpfungspunkt aus Cᵣₑₛ und C_{c} gelangt. Sobald die Spannung in C_{t_a} der Zenerspannung von ZD_{t_a} minus der Flußspannung von D_{t_a} entspricht, wird ZD_{t_a} leitend, die Spannung an C_{t_a} wird nicht weiter erhöht. Der Transistor Tₐ wird schon während der Freilaufphase seiner ihm antiparallelen Freilaufdiode verlustfrei (da spannungslos) eingeschaltet.

Nachdem die in Lᵣₑₛ eingeprägte Energie aufgebraucht ist, endet die Freilaufphase. C_{t_a} beginnt sich durch R_{t_a} zu entladen, und der Strom kann durch Tₐ und ZD_{t_a} (nun nicht mehr in Zener-, sondern in Flußrichtung) sinusförmig über Lᵣₑₛ und die Parallelschaltung aus Cᵣₑₛ und der Serienschaltung aus den Elementen W_{L}, C_{sec}, PTC mit C_{PTC}, W_{H} und schließlich C_{c} zurückschwingen, bis R_{t_a} die Spannung an C_{t_a} unter die Gate-Schwellspannung von Tₐ abgebaut hat und Tₐ abschaltet. Energiequelle für dieses Rückschwingen ist die im vorigen T_{b}-Zyklus in Cᵣₑₛ sowie C_{c} und C_{sec} gespeicherte Energie (nicht in C_{PTC}, da niederohmig vom PTC überbrückt). Nun wird wieder der zur Verringerung von Ausschaltverlusten vorgesehene Cₜᵣₐ umgeladen, bevor der in Lᵣₑₛ eingeprägte Strom seinen durch ZD_{t_b} verstellten Freilaufweg nun von Versorgung-Minus über D_{t_b}, die Parallelschaltung aus C_{t_b} und R_{t_b}, die zu T_{b} antiparallele Bodydiode (d.h. die dem Transistor technologisch bedingt intrinsche Diode) und schließlich über die spannungsgenerierende Lᵣₑₛ und die Resonanzkondensatoren bzw. die Wendeln zu Versorgung-Plus findet. Erreicht nun die Spannung in C_{t_b} den Wert der Zenerspannung von ZD_{t_b} minus der Flußspannung von D_{t_b}, so wird ZD_{t_b} leitend und begrenzt die Spannung an C_{t_b}. Wie schon Tₐ wird auch T_{b} mit Beginn der Freilaufphase eingeschaltet. Der Strom durch T_{b} und ZD_{t_b} schwingt positiv an und C_{t_b} wird wieder über R_{t_b} entladen, bis die Schwellspannung unterschritten wird und T_{b} erneut abschaltet.

Die Oszillation setzt sich Halbzyklus um Halbzyklus in der beschriebenen Weise fort, der über die Wendeln und den Kaltleiter fließende Strom sorgt für eine Vorheizung der Wendeln und eine Aufheizung des Kaltleiters über dessen Kipptemperatur. Nachdem der Kaltleiter nun hochohmig wird und C_{PTC} jetzt kaum mehr kurzschließt, verschiebt sich die Polstelle des Gesamt-Resonanzkreises hin zu einer höheren Frequenz - näher an die von der Halbbrücke erzeugte, wodurch die in der Trapezschwingung der Halbbrücke enthaltene Grundwelle den Resonanzkreis stärker anregt, eine hohe Spannung über der Lampe generiert und diese dadurch zündet. Die dann brennende Lampe bedämpft den Resonanzkreis; die Oszillation setzt sich gleichwohl fort, solange genügend Freilaufenergie zur Steuerung verfügbar ist.

Im Gegensatz zu einer Stromwandlersteuerung oder einer Phasenschiebersteuerung bleibt die Betriebsfrequenz während Vorheiz-, Zünd- und Betriebsphase nahezu gleich (falls in die Sourceleitung keine Elemente, beispielsweise zusätzliche Widerstände, eingebracht werden). Eine kleine Modulation ergibt sich durch unterschiedlich lange Trapezkondensator-Umladezeiten und verschieden lange Freilaufphasen durch die zyklische Veränderung der DC-Versorgungsspannung (Elko-Brumm), da die Halbzyklusdauer gebildet wird aus Cₜᵣₐ-Umladezeit plus Freilaufzeit plus Entladezeit von Cₜ (C_{t_a} bzw. C_{t_b}) über Rₜ (R_{t_a} bzw. R_{t_b}) vom Anfangswert ZDₜ-Spannung minus Dₜ-Flußspannung bis unter die Gate-Schwellspannung. Durch die Auslegung der Bauelemente - insbesondere der zur Last parallelen Kapazitäten - muß in allen Betriebsphasen gewährleistet werden, daß genügend Freilaufstrom in Lᵣₑₛ eingeprägt wird, da sonst die Oszillation stehenbleibt und vom DIAC neu gestartet werden muß.

Ein Nachteil der in Fig. 1 gezeigten Schaltung ist, daß die exponentielle Entladung von Cₜ durch Rₜ den FET sehr langsam ausschaltet, da zuerst der lineare Bereich der FET-Kennlinie mit in der Endphase hohem Kanalwiderstand R_{DSon} durchlaufen wird, bis er schließlich von Rₜ ausgeräumt wird und abschaltet.

Rₜ läßt sich nicht beliebig niederohmig wählen, da sonst bei einer gewünschten Zeitkonstante Cₜ so groß werden müßte, daß der Freilaufstrom nicht mehr in allen Betriebsphasen zur vollständigen Ladung von Cₜ ausreicht. Durch geeignete Auslegung von Cₜᵣₐ kann jedoch ein Großteil der Ausschaltverluste vermieden werden.

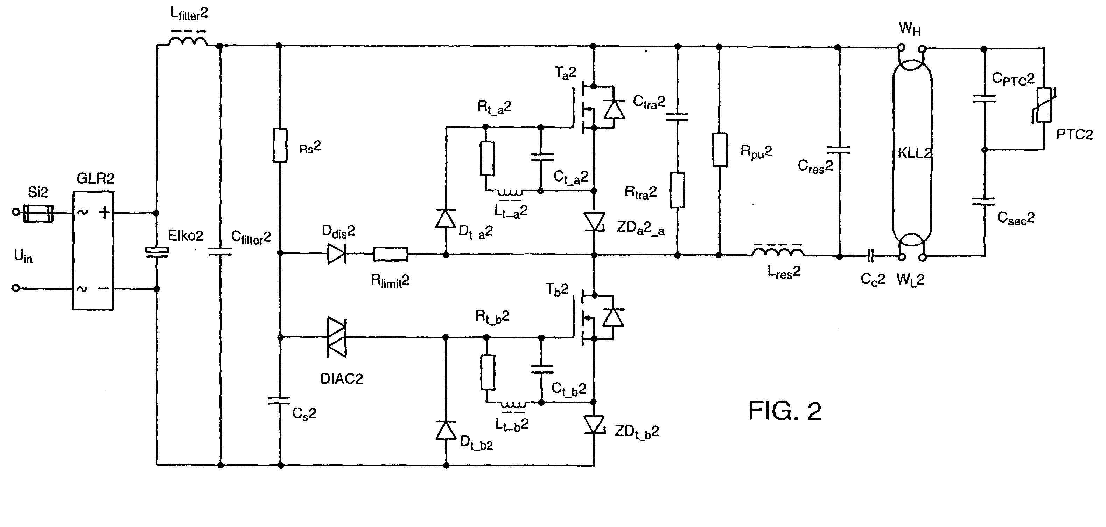

Besonders nachteilig sind deshalb die Durchflußverluste gegen Ende der Einschaltdauer, wenn die Gatespannung so niedrig ist, daß der FET im linearen Bereich betrieben wird. Diesen Nachteil zu überwinden ist Hauptziel der in Fig. 2, Fig. 3, Fig. 4, Fig. 5 und Fig. 7 gezeigten Ausführungen.

In Fig. 2 wird zum Entladewiderstand Rₜ (R_{t_a}2 bzw. R_{t_b}2) zusätzlich eine Entladeinduktivität Lₜ (L_{t_a}2 bzw. L_{t_b}2) in Reihe eingefügt, wodurch Cₜ (C_{t_a}2 bzw. C_{t_b}2) in einer gedämpften Schwingung entladen wird und dadurch die Gatespannung nur in einem kleineren Zeitintervall der Halbperiodendauer als in der Ausführung von Fig. 1 den linearen Bereich des Transistors durchläuft. Als Entladeinduktivität reicht eine sehr kleine und kostengünstige Bauform, z.B. eine BC-Drossel. In der gezeigten Ausführung wird mit Rₜ = 470Ω eine sehr starke Bedämpfung gewählt, um ein Nachschwingen des Schwingkreises aus Cₜ und Lₜ zu unterbinden. Die Bedämpfung kann jedoch auch kleiner sein.

Weiterhin wird der Auskoppelkondensator C_{c}2 nicht wie in Fig. 1 zwischen Plus-Versorgung und Lampe angeordnet, sondern zwischen Lᵣₑₛ2 und W_{L}2.

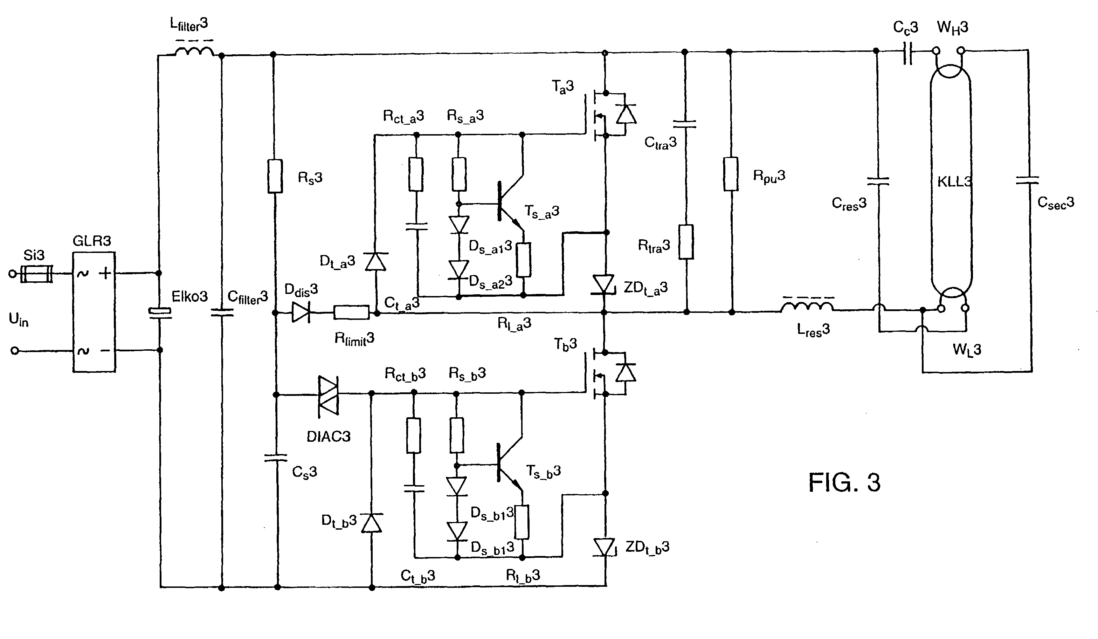

In Fig. 3 wird statt eines einfachen Entladewiderstandes Rₜ (R_{t_a}3 bzw. R_{t_b}3) eine Entladung von Cₜ (C_{t_a}3 bzw. C_{t_b}3) durch eine Konstantstromsenke gewählt, die eine Entladekurve von Cₜ in Form einer abfallenden Geraden erzeugt und damit günstiger ist als die exponentielle Entladekurve eines einfachen Widerstands Rₜ. Die Konstantstromsenke wird beispielhaft gebildet durch den Transistor Tₛ (T_{s_a}3 bzw. T_{s_b}3), die Widerstände Rₛ (R_{s_a}3 bzw. R_{s_b}3) und R₁ (R_{l_a}3 bzw. R_{l_b}3) sowie die Reihenschaltung aus den Dioden D_{s_a1}3 bzw. D_{s_b1}3 und D_{s_a2}3 bzw. D_{s_b2}3.

Weiterhin wird in Fig. 3 auf den Kaltleiter zur Vorheizung der Wendeln verzichtet und ein Kaltstart gewählt, wobei hier der Resonanzkondensator Cᵣₑₛ3 die Wendel W_{L}3 und der Resonanzkondensator C_{sec}3 die Wendel W_{H}3 mit Strom versorgt.

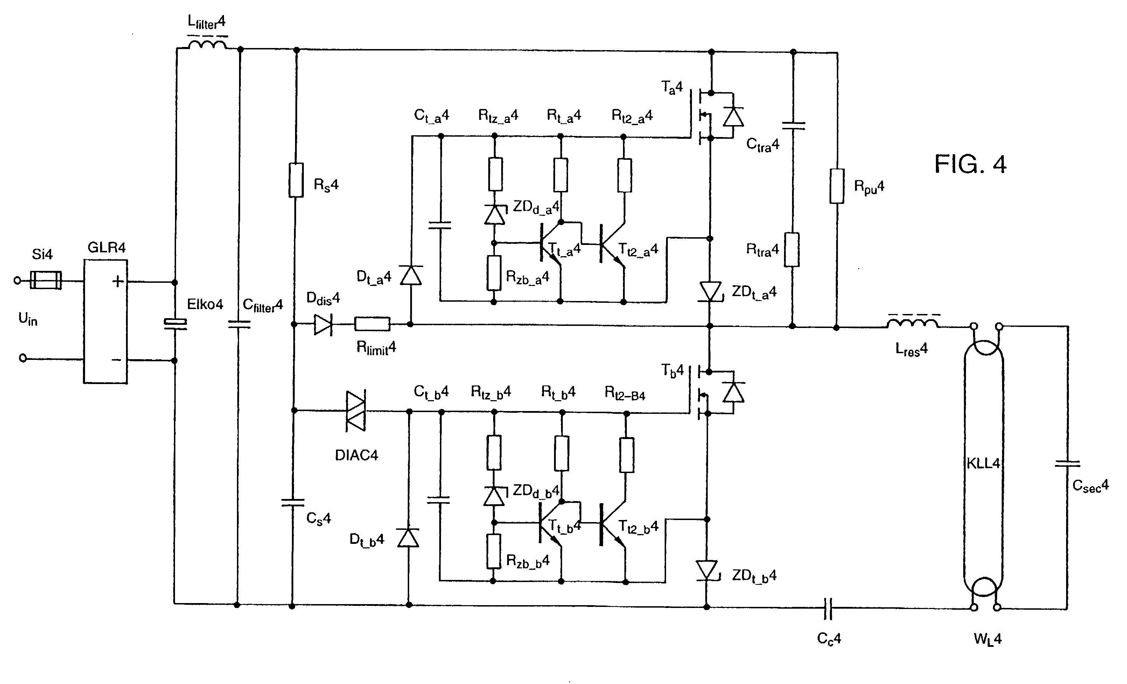

In Fig. 4 wird nun eine umschaltbare Zeitkonstante vorgeschlagen, wobei der zunächst voll geladene Kondensator Cₜ (C_{t_a}4 bzw. C_{t_b}4) anfänglich hochohmig durch die parallelen Entladestrecken aus einer ersten Reihenschaltung von R_{tz} (R_{tz_a}4 bzw. R_{tz_b}4), der Zenerdiode ZD_{d} (ZD_{d_a}4 bzw. ZD_{d_b}4) und der Basis eines ersten Kleinsignal-Transistors Tₜ (T_{t_a}4 bzw. T_{t_b}4), sowie einer zweiten Reihenschaltung aus einem Widerstand R, (R_{t_a}4 bzw. R_{t_b}4) und der durchgesteuerten Kollektor-Emitter-Strecke von T, entladen wird. Sobald die Spannung an Cₜ unter die Schwelle aus der Zenerspannung von ZD_{d} plus der Basis-Emitter-Schwellspannung von Tₜ fällt, wird durch den Widerstand Rₜ (R_{t_a}4 bzw. R_{t_b}4) ein zweiter Kleinsignal-Transistor Tₜ₂ (T_{t2_a}4 bzw. T_{t2_b}4) aufgesteuert, der auf eine zweite, bezogen auf die erste vergleichsweise kurze Zeitkonstante (z.B. 10% der ersten) umschaltet und den Rest der Ladung von Cₜ wie auch die Transistorkapazitäten über Rₜ₂ (R_{t2_a}4 bzw. R_{t2_b}4) rasch entlädt. Die Phase, in der der FET linear betrieben wird, wird also sehr schnell durchlaufen, und auch die Stromfallzeit des Drainstromes verkürzt sich deutlich.

Weiterhin wird auf den zusätzlichen "primärseitigen" Resonanzkondensator Cᵣₑₛ verzichtet und die gesamte notwendige lampenparallele Kapazität in C_{sec}4 zusammengefaßt. Dies ist problemlos möglich, solange die Wendeln W_{H}4 und W_{L}4 nicht zu hochohmig sind. Außerdem wird die Lampe nicht zu Versorgung-Plus, sondern in Serie zum Auskoppelkondensator C_{c}4 zu Versorgung-Minus geschaltet.

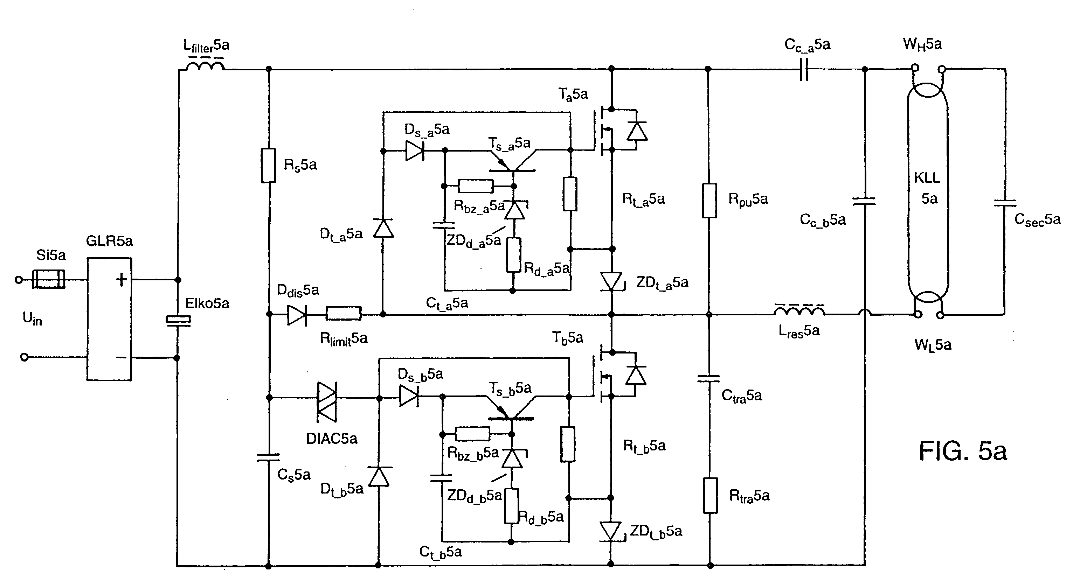

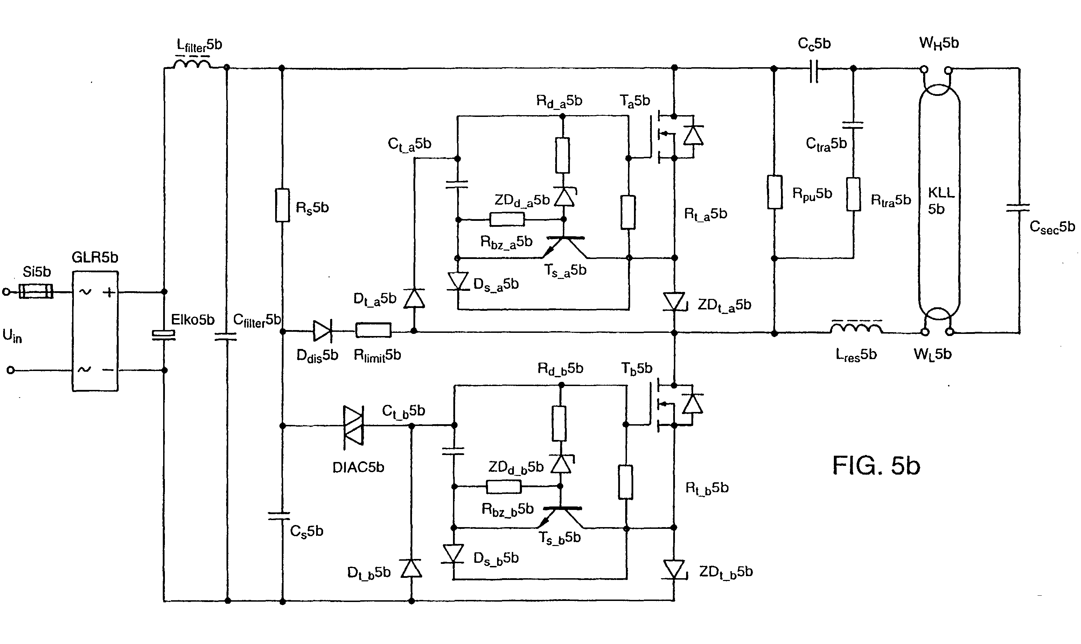

Die Schaltungen in Fig. 5a und Fig. 5b erzielen eine ähnliche Kurvenform der Gatespannung wie in Fig. 4, nur wird zur Umschaltung der Zeitkonstante nicht ein niederohmiger Entladewiderstand zugeschaltet, sondern es wird ab einer bestimmten Spannungsschwelle der Kondensator Cₜ abgetrennt, wodurch nahe dem Ende der Einschaltdauer von Tₐ / T_{b} die Zeitkonstante nur noch aus Rₜ (R_{t_a}5a bzw. R_{t_b}5a) und den vergleichsweise kleinen internen Kapazitäten des FET besteht.

Dabei wird in Fig. 5a der Aufladestrom von Cₜ (C_{t_a}5a bzw. C_{t_b}5a) über eine zusätzlich eingefügte Kleinsignaldiode Dₛ (D_{s_a}5a bzw. D_{s_b}5a) geführt, die in Entladerichtung von Cₜ sperrt. Solange die Spannung an Cₜ größer ist als die vorgebbare Zenerspannung der Zenerdiode ZD_{d} (ZD_{d_a}5a bzw. ZD_{d_b}5a) plus der Emitter-Basis-Spannung des pnp-Kleinsignal-Transistors Tₛ (T_{s_a}5a bzw. T_{s_b}5a), wird dieser Kleinsignal-Transistor aufgesteuert und erlaubt eine Entladung von Cₜ über seine Emitter-Kollektor-Strecke und Rₜ (R_{t_a}5a bzw. R_{t_b}5a). Fällt die Spannung von Cₜ unter diese Schwelle, kann Cₜ nicht weiter entladen werden und ist vom Gate durch den nun sperrenden Tₛ wie auch die sperrende Dₛ abgetrennt, wodurch Rₜ nur mehr die FET-Eingangskapazität entladen muß und somit der lineare Arbeitsbereich schneller durchlaufen wird (ca. 600ns). Das Plateau beim Abfall der Gate-Spannung unter die Schwellspannung hat eine Dauer von ca. 400ns, die reine Fallzeit des Drainstromes liegt bei der aufgezeigten Bauteiledimensionierung bei ca. 100ns und ist damit ausreichend schnell.

Weiterhin wird in Fig. 5a eine symmetrische Auskopplung über die Koppelkondensatoren C_{c_a}5a und C_{c_b}5a vorgenommen. Sind diese groß genug, so ersetzt ihre serielle Wirkung zwischen Versorgung-Plus und -Minus den Filterkondensator C_{filter}, wodurch sich die Bauelementanzahl durch die symmetrische Auskopplung nicht erhöht. Die Reihenschaltung aus Cₜᵣₐ5a und Rₜᵣₐ5a wird in diesem Ausführungsbeispiel vom Halbbrücken-Mittenpunkt zu Versorgung-Minus geschaltet.

In Fig. 5b wird die Minuszuleitung von Cₜ (C_{t_a}5b bzw. C_{t_b}5b) unterbrochen, um einen npn-Kleinsignal-Transistor Tₛ (T_{s_a}5b bzw. T_{s_b}5b) benutzen zu können. Die Wirkung ist jedoch gleichwertig mit der in Fig. 5a.

Selbstverständlich können auch die Schaltungen von Fig. 3 und Fig. 4 mit pnp-Transistoren oder auch mit FET oder integrierten Stromsenken aufgebaut oder anders dimensioniert werden.

Weiterhin wird in Fig. 5b die Reihenschaltung aus Cₜᵣₐ5b und Rₜᵣₐ5b vom Halbbrücken-Mittenpunkt zum Verknüpfungspunkt aus C_{c}5b und W_{H}5b geschaltet.

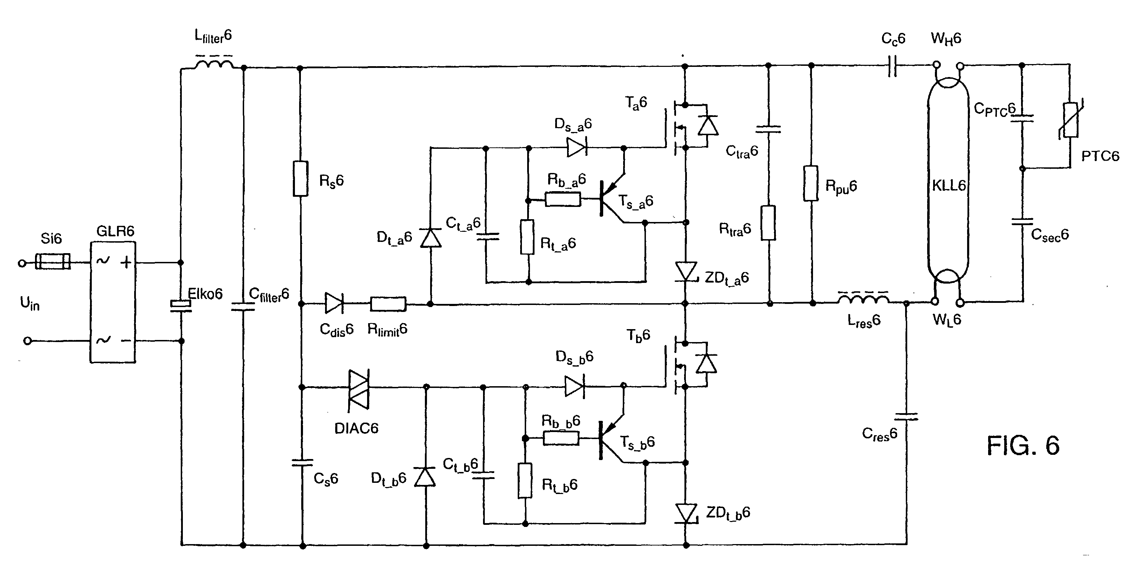

In Fig. 6 wird eine Abschaltbeschleunigung nach Stand der Technik ausgeführt, die zusätzlich auch in allen bisherigen Ausführungen zur Reduzierung der Ausschaltverluste zwischen Cₜ und Gate des FET eingefügt werden kann. Dazu wird das Gate des FET über die Kleinsignaldiode D_{s_a} 6 bzw. D_{s_b}6 aufgeladen, die Entladung erfolgt jedoch über den pnp-Kleinsignal-Transistor T_{s_a}6 bzw. T_{s_b}6, dessen Basis über den Widerstand R_{b_a}6 bzw. R_{b_b}6 mit der Anode von D_{s_a}6 bzw. D_{s_b}6 verbunden ist. Die Dauer des Gatespannungs-Plateaus und die Drainstrom-Fallzeit lassen sich damit wirkungsvoll verkürzen, nicht jedoch das Durchlaufen des linearen Arbeitsbereiches des FET.

Weiterhin wird in Fig. 6 die Lampe zwar über C_{c}6 mit Versorgung-Plus, der Resonanzkondensator Cᵣₑₛ6 jedoch mit Versorgung-Minus verbunden.

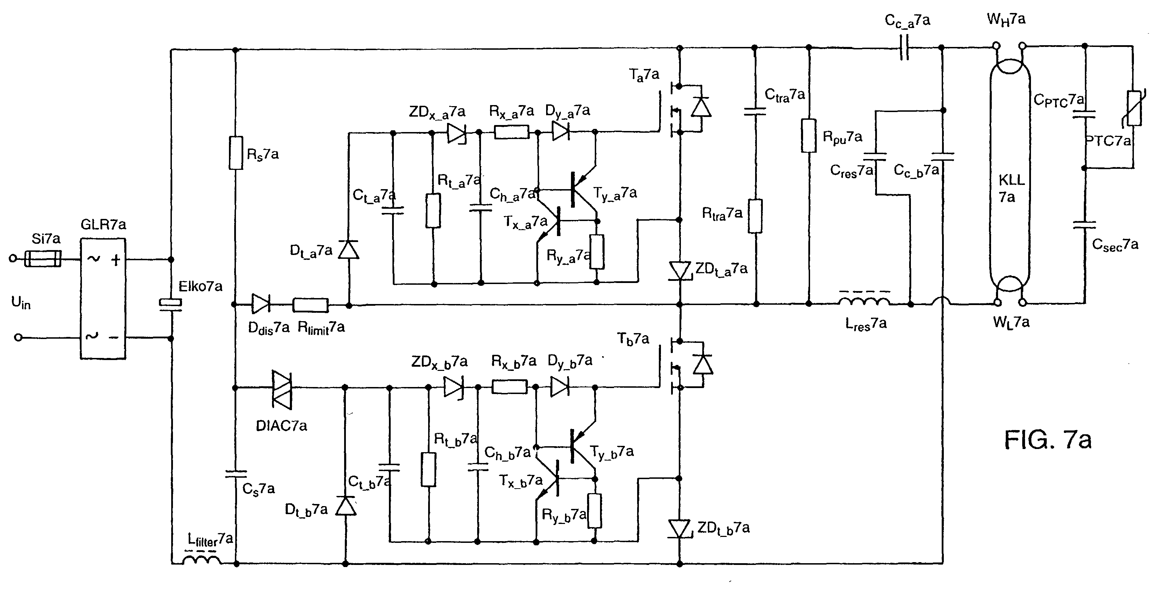

In der Ausführung von Fig. 7a wird das Gate des FET T (Tₐ7a bzw. T_{b}7a) vom Spannungsverlauf an C, (C_{t_a}7a bzw. C_{t_b}7a) parallel Rₜ (R_{t_a}7a bzw. R_{t_b}7a) entkoppelt. Dazu wird die Spannung von Cₜ über eine erste Diode ZDₓ (ZD_{x_a}7a bzw. ZD_{x_b}7a), hier vorzugsweise als Zenerdiode in Durchflußrichtung ausgebildet, in einen kleinen Hilfskondensator Cₕ (C_{h_a}7a bzw. C_{h_b}7a) geladen. Dieser ist aber nur wegen der Rückwärtserholzeit von ZDₓ notwendig. Dann wird die Steuerspannung über einen (relativ niederohmigen) Strombegrenzungswiderstand Rₓ (R_{x_a}7a bzw. R_{x_b}7a) und eine weitere Diode D_{y} (D_{y_a}7a bzw. D_{y_b}7a) auf das Gate des FET gegeben. Ein pnp-Kleinsignal-Transistor T_{y} (T_{y_a}7a bzw. T_{y_b}7a) und ein npn-Kleinsignal-Transistor Tₓ (T_{x_a}7a bzw. T_{x_b}7a) bilden eine Thyristorstruktur, die von der Basis des pnp-Transistors aus gezündet werden kann, sobald die Spannung an C, um die Zenerspannung von ZDₓ plus die Emitter-Basis-Spannung von T_{y} unter die Gatespannung gesunken ist.

Der Widerstand R_{y} (R_{y_a}7a bzw. R_{y_b}7a) zwischen Basis und Emitter des npn-Transistors Tₓ und vor allem die weitere Diode D_{y} von Basis nach Emitter des pnp-Transistors T_{y} verhindern ein "Über-Kopf-Zünden" der Thyristorstruktur durch den vom Freilaufstrom in Cₜ hervorgerufenen steilen Spannungsanstieg. Cₕ stellt den Rückwärtserholstrom von ZDₓ bereit, um die Thyristorstruktur nicht schon bei kleinem Absinken der Spannung an Cₜ durch diesen Rückwärtserholstrom von ZDₓ zu zünden. Der so gebildete Thyristor entlädt nach seiner Zündung das Gate direkt, sowie Cₜ und Cₕ über Rₓ.

Die Schaltung erzeugt am Gate des FET einen nahezu rechteckförmigen Spannungsverlauf, da die erste Zenerdiode ZDₓ entkoppelnd wirkt, und schaltet sehr schnell ab (in der angegebenen Dimensionierung wird eine Drainstromfallzeit von 10ns erreicht).

Durch die Wahl einer Zenerdiodenstrecke mit negativem Temperaturgang läßt sich eine Frequenzerhöhung und damit eine Leistungsrückregelung bei hohen Umgebungstemperaturen (ähnlich der Ferritauswahl bei Ansteuerung durch einen Sättigungsstromwandler) erzielen.

Weiterhin wird in Fig. 7a wieder eine symmetrische Auskopplung mit den Koppelkondensatoren C_{c_a}7a und C_{c_b}7a gewählt und auf C_{filter} verzichtet, wobei hier Cᵣₑₛ7a zwischen den Verknüpfungspunkt aus Lᵣₑₛ7a und W_{L}7a und den Verknüpfungspunkt aus C_{c_a}7a, C_{c_b}7a und W_{H}7a gelegt ist, und die Filterdrossel L_{filter}7a in die Minus-Leitung der Versorgung geschaltet wurde.

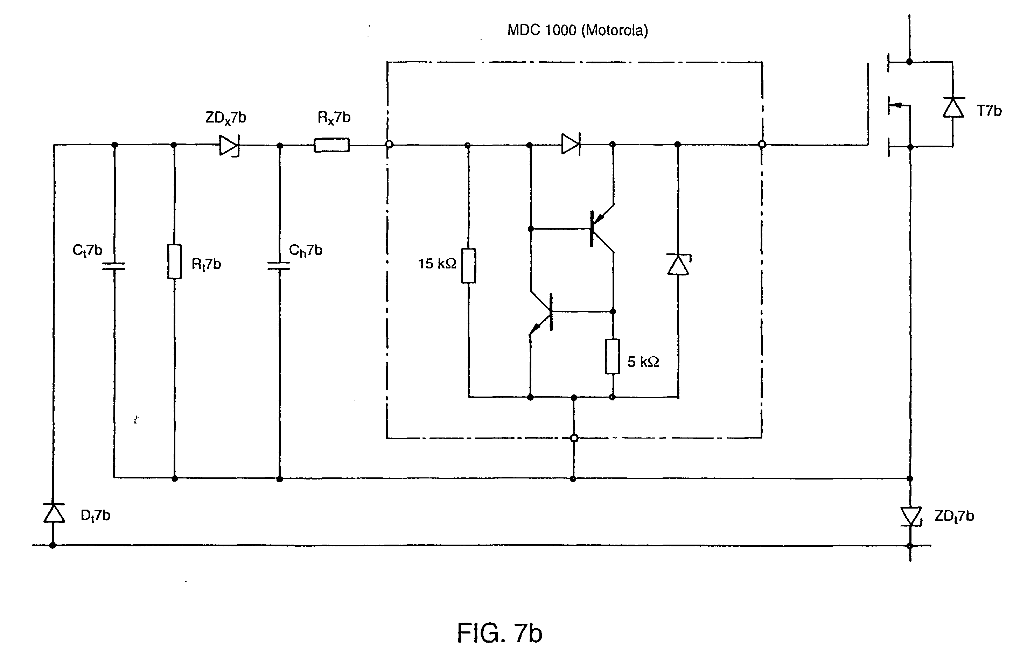

Eine Thyristorstruktur ist bereits in dem (einfachen und kostengünstigen) 3-Pin-Baustein MDC1000 von Motorola enthalten und kann - siehe Fig. 7b - zur Verringerung der Bauteilanzahl genutzt werden. Der interne Widerstand von 15kΩ im Baustein MDC1000 bildet natürlich mit Cₕ7b eine zweite, unerwünschte Zeitkonstante, die deutlich größer sein muß als Cₜ7b* Rₜ7b.

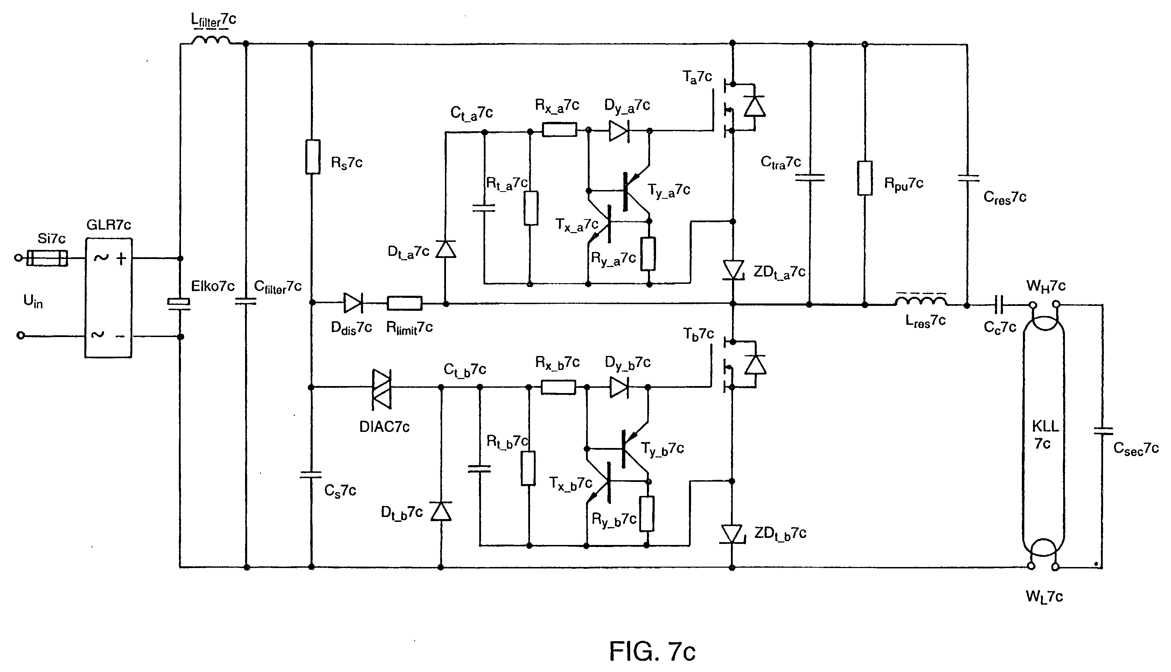

Auch Fig. 7c zeigt eine Thyristorabschaltung, jedoch ohne die Zenerdiode zur Festlegung der Spannungsdifferenz zwischen Cₜ und Gatespannung, bei der die Thyristorstruktur gezündet werden soll. Die Spannungsdifferenz entspricht nun der Flußspannung der Entkoppeldiode D_{y} (D_{y_a}7c bzw. D_{y_b}7c) - da ja Cₜ (C_{t_a}7c bzw. C_{t_b}7c) anfänglich um diese ca. 0,6V höher aufgeladen ist als das Gate - plus der Emitter-Basis-Spannung des pnp-Transistors T_{y} (T_{y_a}7c bzw. T_{y_b}7c), der mit Tₓ (T_{x_a}7c bzw. T_{x_b}7c) die Thyristorstruktur bildet und das Gate von T (Tₐ7c bzw. T_{b}7c) direkt, sowie Cₜ über den Strombegrenzungswiderstand Rₓ (R_{x_a}7c bzw. R_{x_b}7c) entlädt. Wegen dieser geringen Differenz muß Rₜ (R_{t_a}7c bzw. R_{t_b}7c) hochohmiger ausgelegt sein.

Nachteilig bei dieser vereinfachten Anordnung ist jedoch der größere Temperaturgang der Differenz-Schwelle und die sich aus einer möglichen Bauteilstreuung ergebenden Abweichungen.

Weiterhin wird in Fig. 7c die Wendel W_{L}7c zu Versorgung-Minus, der Resonanzkondensator Cᵣₑₛ7c aber zu Versorgung-Plus geschaltet.

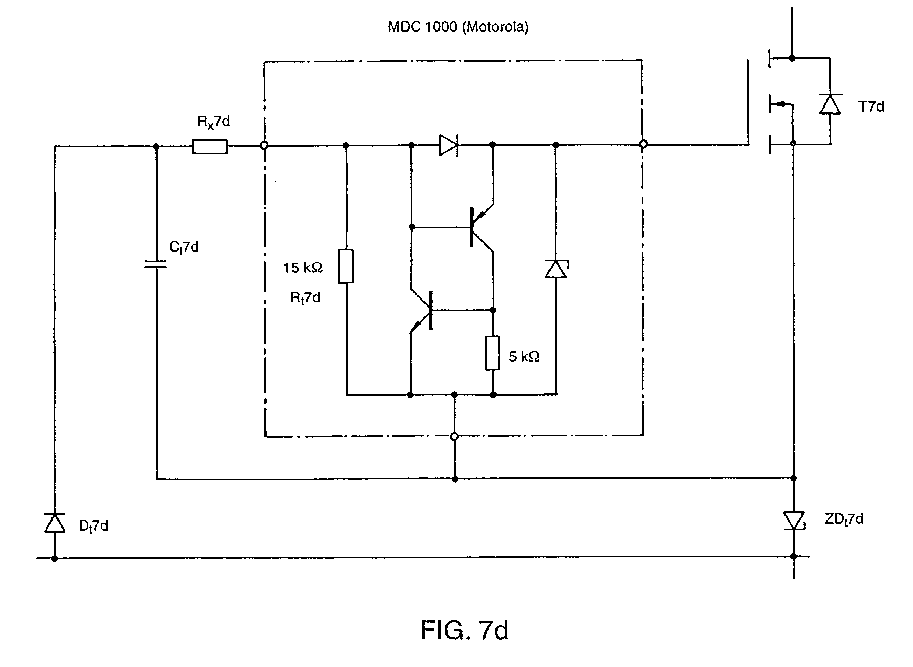

Fig. 7d zeigt die Schaltung aus Fig. 7c unter Verwendung des erwähnten 3-Pin-Bausteines MDC1000 von Motorola zur Verringerung der Bauelementeanzahl. Dabei wird der interne Widerstand von 15kΩ im Baustein MDC1000 als Entladewiderstand Rₜ7d (zusammen mit dem zur Entladung in Reihe liegenden, aber kleinen Rₓ7d) genutzt. Rₓ7d begrenzt den Entladestrom von Cₜ7d nach Zündung der Thyristorstruktur.

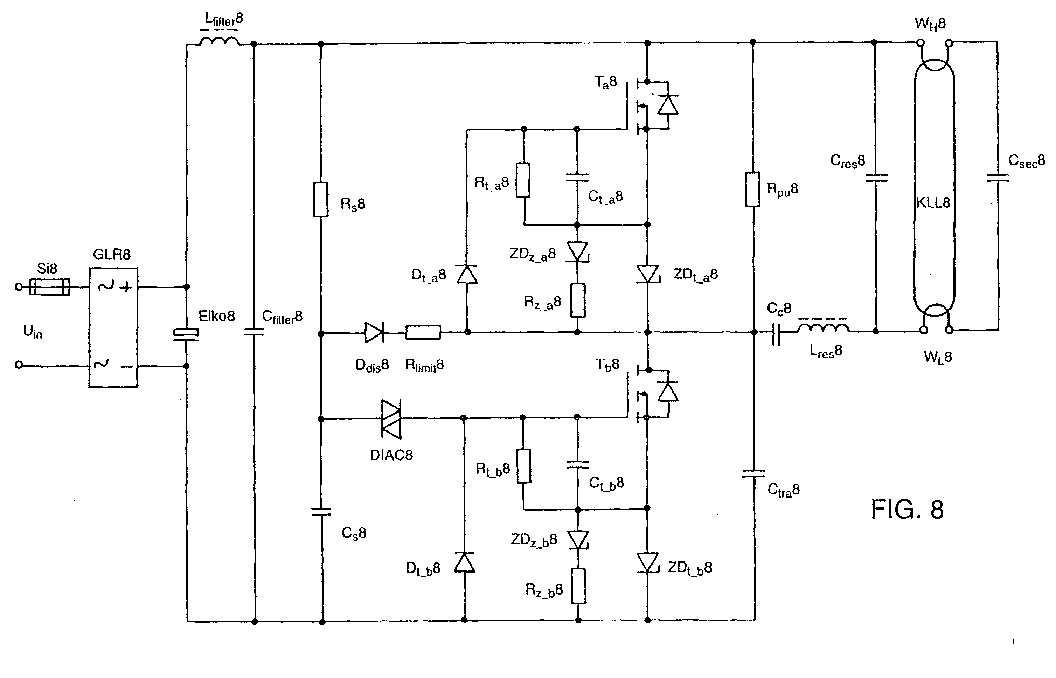

In Fig. 8 wird in Serie zu einer Zenerdiode ZD_{z} (ZD_{z_a}8 bzw. ZD_{z_b}8) im Freilaufweg ein Widerstand R_{z} (R_{z_a}8 bzw. R_{z_b}8) vorgeschlagen. Zur Verringerung der Verluste während der Transistoreinschaltzeit wird diese Reihenschaltung vorzugsweise durch eine weitere Diode überbrückt. Diese kann ebenfalls als Zenerdiode ZDₜ (ZD_{t_a}8 bzw. Zd_{t_b}8) mit höherer Spannung als ZD_{z} ausgebildet sein.

Damit ist die Spitzenspannung in Cₜ in Abhängigkeit von der Höhe des Freilaufstromes (z.B. während der Zündung) beeinflußbar, bis hin zu einem Maximalwert, der durch die zweite Zenerdiode ZDₜ gegeben ist.

Weiterhin wird in Fig. 8 die Reihenfolge der - bezogen auf den zum Laststrom in Reihe liegenden - Lᵣₑₛ8 und C_{c}8 vertauscht und C_{c}8 zum Halbbrükken-Mittenpunkt geschaltet.

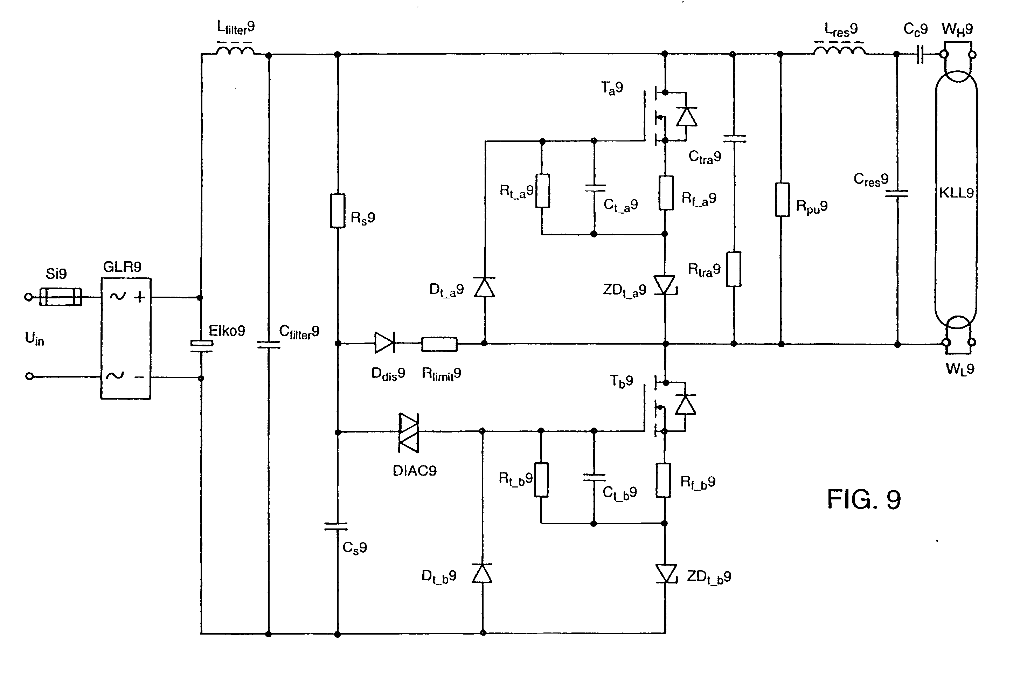

In Fig. 9 wird in die Sourcezuleitung des FET Tₐ9 bzw. T_{b}9 ein Gegenkopplungswiderstand (dem Fachmann bekannt) R_{f_a}9 bzw. R_{f_b}9 eingefügt.

Weiterhin wird in Fig. 9 die Resonanzdrossel Lᵣₑₛ9 nicht zwischen Halbbrükken-Mittenpunkt und Lampe, sondern zwischen Versorgung-Plus (möglich wäre natürlich auch Versorgungs-Minus) und über C_{c}9 zur Lampe an W_{H}9 geschaltet. Die andere Wendel W_{L}9 wird zum Halbbrücken-Mittenpunkt verbunden. Die Wendeln W_{H}9 bzw. W_{L}9 sind kurzgeschlossen, und die gesamte lampenparallele Kapazität ist in Cᵣₑₛ9 zusammengefaßt.

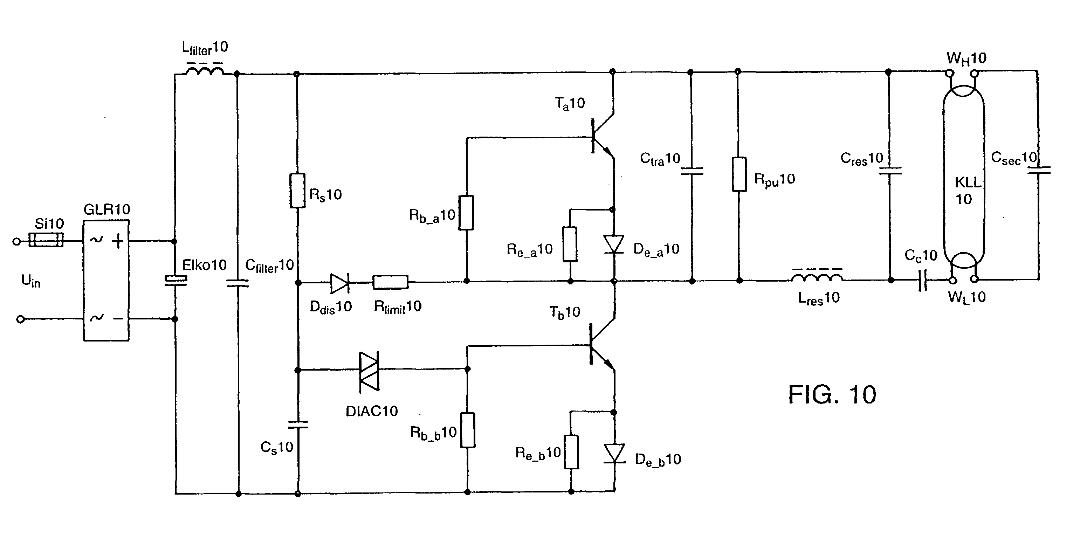

In den folgenden Schaltungsausführungen von Fig. 10 bis Fig. 14 werden bipolare Leistungstransistoren verwendet.

Fig. 10 zeigt dabei eine Minimalausführung ohne Freilaufdiode, in der der Freilaufstrom über einen Basiswiderstand R_{b} (R_{b_a}10 bzw. R_{b_b}10) durch die Basis-Kollektordiode des bipolaren Leistungstransistors T (Tₐ10 bzw. T_{b}10) fließt und den Transistor so mit Ladungsträgern überschwemmt, daß dieser auch nach Ende der Freilaufzeit noch während seiner Speicherzeit leitend bleibt. Der Basiswiderstand R_{b} ist mindestens beim unteren Transistor T_{b}10 notwendig, da sonst der erstmalige Startpuls aus dem DIAC nicht in die Basis-Emitterstrecke von T_{b}10 eingespeist werden kann. Anstelle von Tₐ10 würde theoretisch (als "Quasi-Leistungsschaltelement") auch eine definiert langsame Freilaufdiode ausreichen, die nach ihrer Durchflußphase durch den Freilaufstrom noch für eine bestimmte Rückwärts-Erholzeit geöffnet bleibt. Solch definiert langsame Dioden stehen jedoch nicht zur Verfügung. T_{b}10 müßte aber auch wegen der oben erwähnten Erst-Ansteuerbarkeit durch den DIAC als Transistor (und damit jedenfalls als Leistungsschaltelement) ausgeführt sein.

Die sehr einfache Schaltung zeigt eine sehr große Streuung der Betriebsfrequenz (und damit auch der Leistung), da die Einschaltdauer des Transistors durch seine Speicherzeit definiert ist und mit Bauteilstreuung, Temperatur, aber auch unterschiedlicher Freilaufphase sehr stark variiert. Deshalb wird an den Emitter ein relativ hoher Gegenkopplungswiderstand Rₑ (R_{e_a}10 bzw. R_{e_b}10) angefügt. Damit dieser die Zündfähigkeit mit ihren sehr viel höheren Strömen nicht zu sehr beeinträchtigt, wird er in der gewählten Ausführung mit Dioden Dₑ (D_{e_a}10 bzw. D_{e_b}10) überbrückt (vgl. DE 38 35 121 A1).

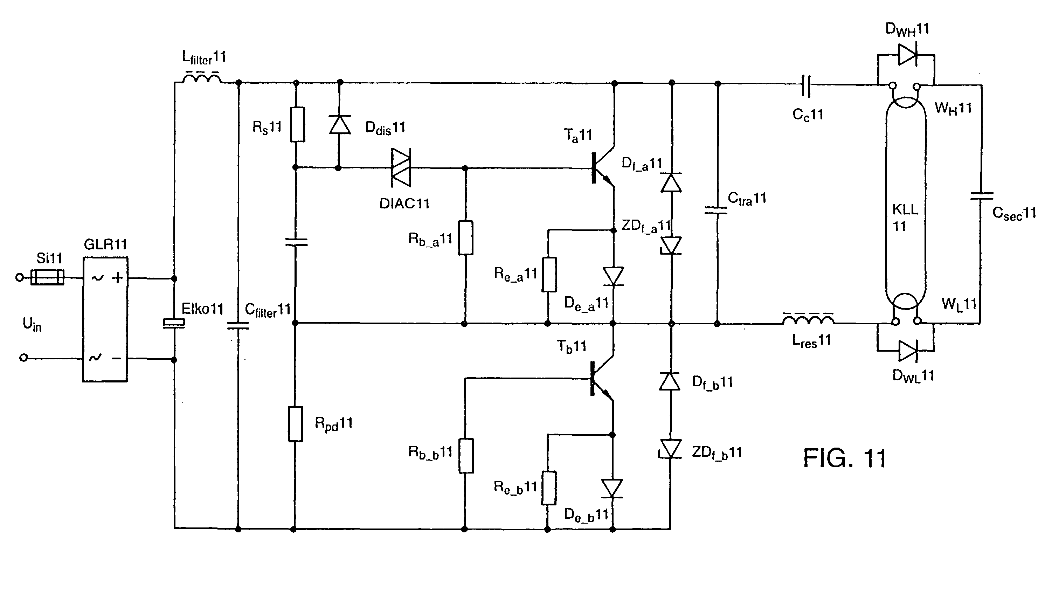

Fig. 11 beschreibt bereits eine Verbesserung der Grundschaltung von Fig. 10. Parallel zum Ansteuer-Freilaufweg aus R_{b} (R_{b_a}11 bzw. R_{b_b}11) und Basis-Kollektordiode von T (Tₐ11 bzw. T_{b}11) wird noch eine reguläre Freilaufdiode D_{f} (D_{f_a}11 bzw. D_{f_b}11) angeordnet, deren Durchflußschwelle durch eine zusätzliche antiserielle Zenerdiode ZD_{f} (ZD_{f_a}11 bzw. ZD_{f_b}11) um die Spannung U_{ZDf} erhöht wird. Dadurch kann die Höhe der Basis-Kollektorbestromung während der Freilaufphase auf ca. U_{ZDf}:R_{b} konstant gehalten werden (da die Basis-Kollektor-Schwellspannung von T in etwa der Flußspannung der Freilaufdiode D_{f} entspricht).

Weiterhin wird in Fig. 11 im Gegensatz zu den bisherigen Ausführungen nicht der untere Transistor T_{b}11, sondern der obere Transistor Tₐ11 vom DIAC erstmalig angestoßen, wodurch der Startkondensator Cₛ11 notwendigerweise zum Mittenpunkt der Halbbrücke als Bezugspotential verbunden wird. Geladen wird Cₛ11 von Rₛ11 aus Versorgung-Plus, wobei der Mittenpunkt der Halbbrücke hier über einen "Pull-Down"-Widerstand R_{pd}11 nach Versorgung-Minus verbunden sein muß. Die Entlade-Diode D_{dis}11 wird parallel zu Rₛ11 mit der Anode zu Cₛ11 geschaltet.

Die Wendeln W_{H}11 und W_{L}11 sind mit den Dioden D_{WH}11 und D_{WL}11 überbrückt, um nur jeweils eine Halbwelle des über C_{sec}11 fließenden Resonanzstromes in der Wendel zu führen. Damit kann nachträglich eine Anpassung der äußeren Beschaltung der Lampe an einen sonst nicht optimalen Ohmschen Wendelwiderstand vorgenommen werden.

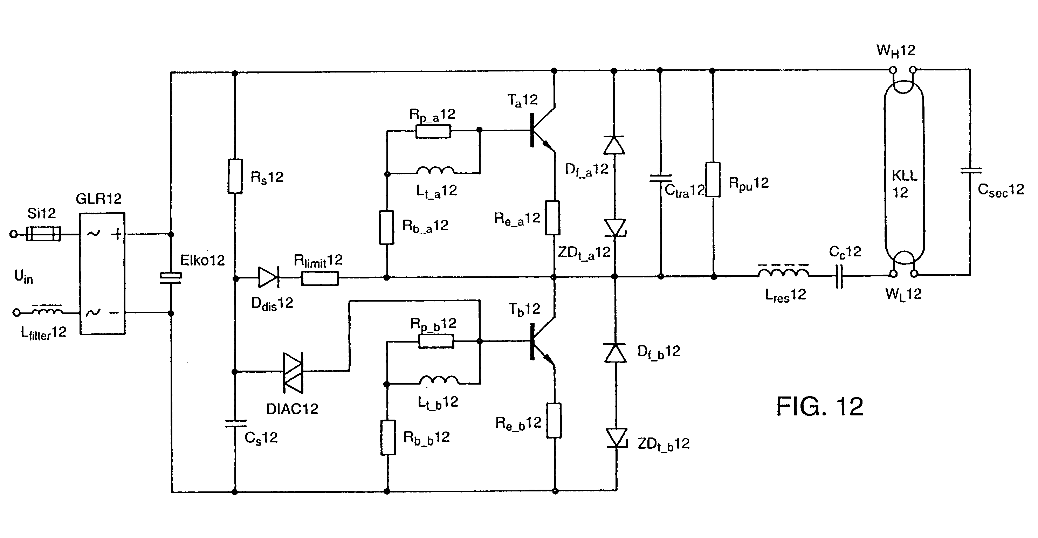

Die in Fig. 12 gezeigte Schaltungsvariante verbessert das Betriebsverhalten, indem in Serie zu R_{b} (R_{b_a}12 bzw. R_{b_b}12) eine Parallelschaltung aus einer Steuerdrossel Lₜ (L_{t_a}12 bzw. L_{t_b}12) und einem Bedämpfungswiderstand Rₚ (R_{p_a}12 bzw. R_{p_b}12) eingefügt wird. Dies bewirkt, daß während der Freilaufphase in Lₜ ein Steuerstrom eingeprägt wird, wobei nach Abklingen des Freilaufstromes der in Lₜ eingeprägte Steuerstrom weiter in die Basis-Emitter-Strecke des Transistors T (Tₐ12 bzw. T_{b}12) gespeist wird, dabei dieser eingeprägte Steuerstrom fast linear abnimmt, schließlich zu Null wird, und nun während der Speicherzeit des Transistors sich ein negativer Ausräumstrom in Lₜ einprägt, der nach Ablauf der Speicherzeit die Basis mit dem eingeprägten negativen Steuerstrom sehr definiert ausräumt.

Hier ist nun die Einschaltzeit des Transistors nicht mehr nur durch seine Speicherzeit allein definiert, sondern zu erheblichem Anteil durch die in Lₜ zwischengespeicherte Steuerenergie. Zusätzlich wird das Abschaltverhalten verbessert.

Weiterhin wird in Fig. 12 auf den Filterkondensator C_{filter} verzichtet, und die Filterdrossel L_{filter} wird in die Stromzuführung vor dem Elko gelegt, hier auf der Wechselstromseite vor dem Gleichrichter GLR12. L_{filter} kann natürlich auch als Drossel mit aufgeteilter Wicklung in beide Zuleitungen verschaltet sein, auch als stromkompensierte Drossel, und kann auch mit weiteren Entstörbauelementen kombiniert werden.

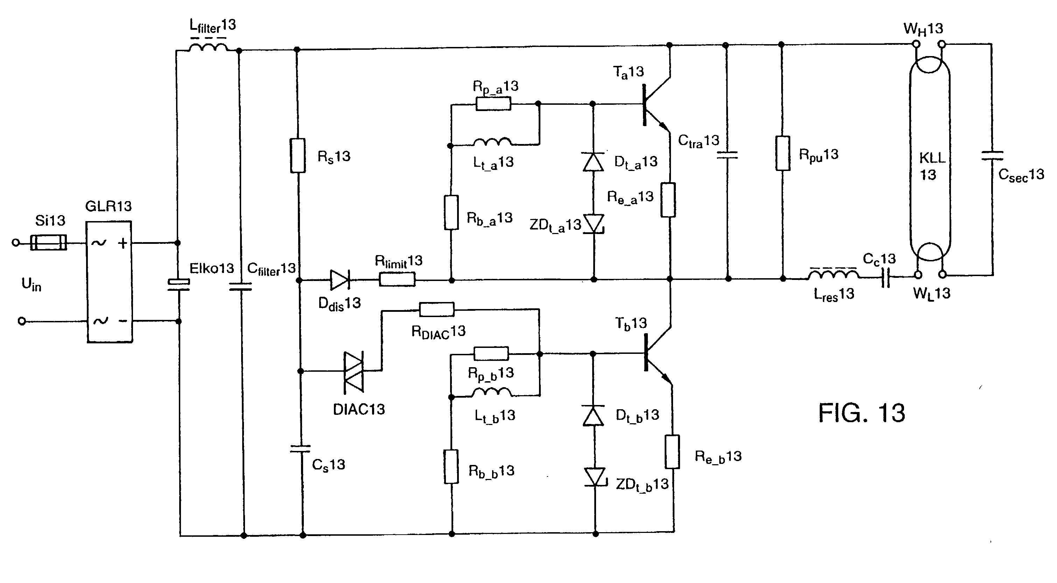

In Fig. 13 ist eine weitere Variation der Freilauf-Ansteuerung gezeigt. Dabei wird zunächst auf die in Fig. 11 eingeführte Serienschaltung aus Freilaufdiode und antiserieller Zenerdiode verzichtet und damit der gesamte Freilaufstrom in die Basis-Kollektor-Diode von T (Tₐ13 bzw. T_{b}13) gespeist, jedoch wird zur Begrenzung der Spannung über der Emitter-Basis-Strecke (zu der auch der Stromanstieg in Lₜ (L_{t_a}13 bzw. L_{t_b}13) direkt proportional ist) während der Freilaufphase eine Serienschaltung aus einer Kleinsignaldiode Dₜ (D_{t_a}13 bzw. D_{t_b}13) und einer antiseriellen Zenerdiode ZDₜ (ZD_{t_a}13 bzw. ZD_{t_b}13) parallel zur Serienschaltung aus Basis-Emitter-Strecke von T und Emitterwiderstand Rₑ (R_{e_a}13 bzw. R_{e_b}13) verwendet. Vorteilhaft gegenüber der Ausführung in Fig. 12 ist der geringere Preis der Kleinsignaldiode gegenüber der (schnellen Hochvolt-) Freilaufdiode; nachteilig ist die fehlende Entkopplung des Ansteuerstromes von der Höhe des Freilaufstromes. Alternativ zur Zenerdiode antiseriell zur Kleinsignaldiode kann auch eine Serienschaltung aus einer oder mehreren weiteren Kleinsignaldioden verwendet werden.

Zur Begrenzung der Amplitude des DIAC-Startpulses wird ein Begrenzungswiderstand R_{DIAC}13 in Reihe zum DIAC geschaltet.

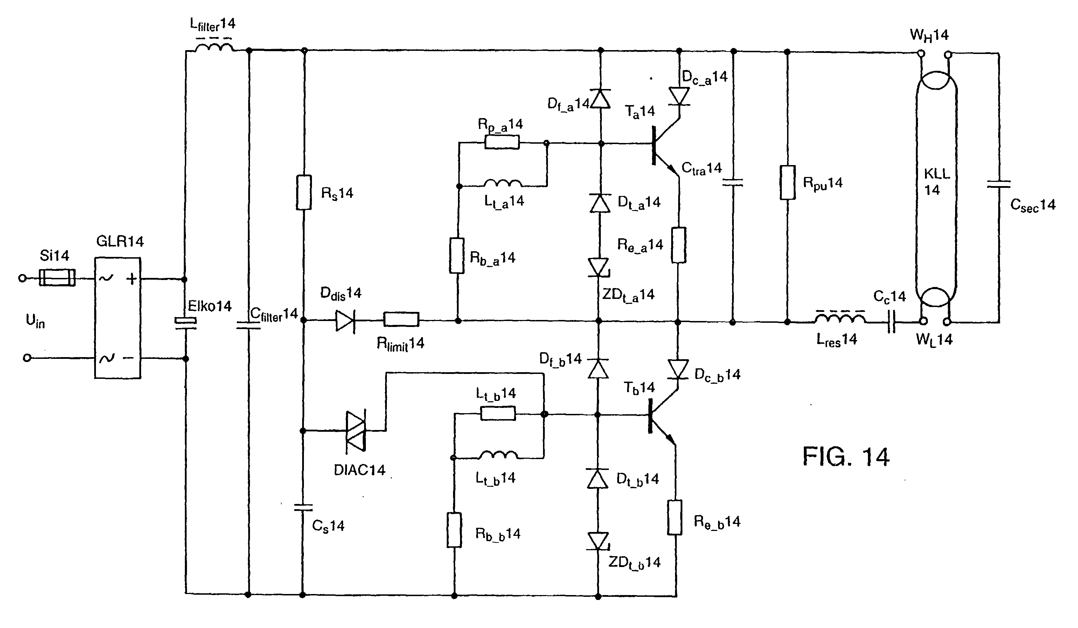

Die Ausführung in Fig. 14 hat, verglichen mit Fig. 13, noch zusätzliche Freilaufdioden D_{f} (D_{f_a}14 bzw. D_{f_b}14) von der Basis des oberen Transistors Tₐ14 zum Pluspotential der Versorgung sowie von der Basis des unteren Transistors T_{b}14 zum Mittenpotential der Halbbrücke. Dadurch fließt zumindest ein Teil des Freilaufstromes über diese Strecke und bestromt nicht mehr die Basis-Kollektor-Diode des Transistors Tₐ14 bzw. T_{b}14, wobei in die Kollektorzuleitung des Transistors ein Bauteil oder eine Baugruppe eingefügt werden kann, das durch seinen Spannungsabfall während der Freilaufphase den Weg des Freilaufstromes über die eingefügte Freilaufdiode D_{f} weiter begünstigt, und in einer besonders bevorzugten Ausführungsform dieses Bauelement in Serie zum Kollektor eine Diode D_{c} (D_{c_a}14 bzw. D_{c_b}14) ist, so daß der gesamte Freilaufstrom über die eingefügte Freilaufdiode gezwungen wird. Der Freilaufstrom erzeugt über der Zener-Strecke aus der Reihenschaltung der Zenerdiode ZDₜ (ZD_{t_a}14 bzw. ZD_{t_b}14) und der Kleinsignaldiode D, (D_{t_a}14 bzw. D_{t_b}14) parallel zum R_{b}-Lₜ-Rₚ-Netzwerk einen Spannungsabfall, der in Lₜ (L_{t_a}14 bzw. L_{t_b}14) einen Stromanstieg bewirkt. Dieser in Lₜ eingeprägte Strom ist die einzige und zudem definierte Ansteuerquelle für den Transistor, so daß lediglich noch die normale Speicherzeit des Transistors (wie bei jeder Sättigungsstromwandlerschaltung auch) für eine gewisse Streuung sorgt. Natürlich könnte auch diese Speicherzeit und damit ihre Streuung durch eine Entsättigungsschaltung an T weiter reduziert werden.

Von allen untersuchten bipolaren Varianten weist diese die geringsten Streuungen auf, bedingt aber auch den größten Aufwand.

Die in Fig. 1 bis Fig. 14 beispielhaft verwendeten Bauteile und Dimensionierungen werden nachfolgend aufgelistet. Dabei sind folgende Bauteile in allen Ausführungsbeispielen gleich:

| | |
|---|---|
| Si | 1 A mittelträge |
| GLR | DF06M |
| Elko | 4,7µF 350V |
| L_{filter} | 1,5mH SIEMENS-BC (bobbin core) |
| C_{filter} | 220nF 400V MKT |
| Rₛ | 1MΩ (außer Fig. 11) |
| Cₛ | 100nF 63V |
| D_{dis} | 1N4004 |
| DIAC | DB3N |
| Rₗᵢₘᵢₜ | Fig. 1 - Fig. 9: 330Ω |
| | Fig. 10 - Fig. 14: 100Ω |
| Dₜ | 1N4148 |
| T | FET: SSU1N50 (Fig. 1 - Fig. 9) |
| | bipolar: BUD43B (Fig. 10 - Fig. 14) |
| Rₜᵣₐ | 22Ω |
| Cₜᵣₐ | 1nF 630V MKP |
| Rₚᵤ | 470kΩ |
| PTC | S1380 (175Ω Kaltwiderstand) |

Die anderen Bauteile sind den folgenden Zusatzstücklisten zu entnehmen:

| Fig. 1: | |
|---|---|
| R_{t_a} / R_{t_b} | 680Ω |
| C_{t_a} / C_{t_b} | 6,8nF 63V MKT |
| ZD_{t_a} / ZD_{t_b} | BZX 85 / C 15 (15V) |
| Lᵣₑₛ | 3mH EF16 |
| Cᵣₑₛ | 2,2nF 1000V MKP |
| C_{c} | 47nF 400V MKT |
| C_{sec} | 10nF 500V MKT |
| C_{PTC} | 4,7nF 500V MKT |

| Fig. 2: | |
|---|---|
| R_{t_a}2 / R_{t_b}2 | 470Ω |
| C_{t_a}2 / C_{t_b}2 | 6,8nF 63V MKT |
| L_{t_a}2 / L_{t_b}2 | 4,7mH SIEMENS-BC (bobbin core) |
| ZD_{t_a}2 / ZD_{t_b}2 | BZX 85 / C 15 (15V) |
| Lᵣₑₛ2 | 3mH EF16 |
| Cᵣₑₛ2 | 2,2nF 1000V MKP |
| C_{c}2 | 47nF 400V MKT |
| C_{sec}2 | 10nF 500V MKT |
| C_{PTC}2 | 4,7nF 500V MKT |

| Fig. 3: | |
|---|---|
| R_{ct_a}3 / R_{ct_b}3 | 22Ω |
| C_{t_a}3 / C_{t_b}3 | 6,8nF 63V MKT |
| R_{sa_a}3 / R_{sa_b}3 | 10kΩ |
| D_{s_a1}3 / D_{s_a2}3 / D_{s_b1}3 / D_{s_b2}3 | 1N4148 |
| T_{s_a}3 / T_{s_b}3 | BC546B |
| R_{l_a}3 / R_{l_b}3: | 43Ω |
| ZD_{t_a}3 / ZD_{t_b}3 | BZX 85 / C 15 (15V) |
| Lᵣₑₛ3 | 3mH EF16 |
| Cᵣₑₛ3 | 2,7nF 1000V MKP |
| C_{c}3 | 47nF 400V MKT |
| C_{sec}3 | 2,7nF 1000V MKP |

| Fig. 4: | |
|---|---|
| C_{t_a}4 / C_{t_b}4 | 1,5nF 63V MKT |
| R_{tz_a}4 / R_{tz_b}4 | 10kΩ |
| ZD_{d_a}4 / ZD_{d_b}4 | BZX 55 / C 6V8 (6,8V) |
| R_{zb_a}4 / R_{zb_b}4 | 10kΩ |
| R_{t_a}4 / R_{t_b}4 | 4,7kΩ |
| R_{t2_a}4 / R_{t2_b}4 | 220Ω |
| T_{t_a}4 / T_{t_b}4 / T_{t2_a}4 / T_{t2_b}4 | BC546B |
| ZD_{t_a}4 / ZD_{t_b}4 | BZX 85 / C 15 (15V) |
| Lᵣₑₛ4 | 3mH EF16 |
| C_{c}4 | 47nF 400V MKT |
| Cᵣₑₛ4 | 6,8nF 1000V MKP |

| Fig. 5a: | |
|---|---|
| D_{s_a}5a / D_{s_b}5a | 1N4148 |
| C_{t_a}5a / C_{t_b}5a | 15nF 63V MKT |
| R_{bz_a}5a / R_{bz_b}5a | 10kΩ |
| T_{s_a}5a / T_{s_b}5a | BC556B |
| ZD_{d_a}5a / ZD_{d_b}5a | BZX 55 / C 8V2 (8,2V) |
| R_{d_a}5a / R_{d_b}5a | 3,3kΩ |
| R_{t_a}5a / R_{t_b}5a | 680Ω |
| ZD_{t_a}5a / ZD_{t_b}5a | BZX 85 / C 15 (15V) |
| Lᵣₑₛ5a | 3mH EF16 |
| C_{c_a}5a / C_{c_b}5a | 100nF 250V MKT |
| Cᵣₑₛ5a | 6,8nF 1000V MKP |

| Fig. 5b: | |
|---|---|
| D_{s_a}5b / D_{s_b}5b | 1N4148 |
| C_{t_a}5b / C_{t_b}5b | 15nF 63V MKT |
| R_{bz_a}5b / R_{bz_b}5b | 10kΩ |
| T_{s_a}5b / T_{s_b}5b | BC546B |
| ZD_{d_a}5b / ZD_{d_b}5b | BZX 55 / C 8V2 (8,2V) |
| R_{d_a}5b / R_{d_b}5b | 3,3kΩ |
| R_{t_a}5b / R_{t_b}5b | 620Ω |
| ZD_{t_a}5b / ZD_{t_b}5b | BZX 85 / C 15 (15V) |
| Lᵣₑₛ5b | 3mH EF16 |
| C_{c_a}5b / C_{c_b}5b | 100nF 250V MKT |
| Cᵣₑₛ5b | 6,8nF 1000V MKP |

| Fig. 6: | |
|---|---|
| C_{t_a}6 / C_{t_b}6 | 6,8nF 63V MKT |
| R_{t_a}6 / R_{t_b}6 | 680Ω |
| D_{s_a}6 / D_{s_b}6 | 1N4148 |
| R_{b_a}6 / R_{b_b}6 | 10kΩ |
| T_{s_a}6 / T_{s_b}6 | BC556B |
| ZD_{t_a}6 / ZD_{t_b}6 | BZX 85 / C 15 (15V) |
| Lᵣₑₛ6 | 3mH EF16 |
| C_{c}6 | 47nF 400V MKT |
| Cᵣₑₛ6 | 2,2nF 1000V MKP |
| C_{sec}6 | 10nF 500V MKT |
| C_{PTC}6 | 3,3nF 500V MKT |

| Fig. 7a: | |
|---|---|
| C_{t_a}7a / C_{t_b}7a | 4,7nF 63V MKT |
| R_{t_a}7a / R_{t_b}7a | 3,6kΩ |
| ZD_{x_a}7a / ZD_{x_b}7a | BZX 55 / C 3V6 (3,6V) |
| C_{h_a}7a / C_{h_b}7a | 1nF 63V MKT |
| R_{x_a}7a / R_{x_b}7a | 100Ω |
| D_{y_a}7a / D_{y_b}7a | 1N4148 |
| T_{y_a}7a / T_{y_b}7a | BC556B |
| T_{x_a}7a / T_{x_b}7a | BC546B |
| R_{y_a}7a / R_{y_b}7a | 5,1kΩ |
| ZD_{t_a}7a / ZD_{t_b}7a | BZX 85 / C 12 (12V) |
| Lᵣₑₛ7a | 3mH EF16 |
| C_{c_a}7a / C_{c_b}7a | 100nF 250V MKT |
| Cᵣₑₛ7a | 6,8nF 1000V MKP |
| C_{sec}7a | 6,8nF 500V MKT |
| C_{PTC}7a | 3,3nF 500V MKT |

| Fig. 7b: | |
|---|---|
| Cₜ7b | 4,7nF 63V MKT |
| Rₜ7b | 4,7kΩ |
| ZDₓ7b | BZX 55 / C 3V6 (3,6V) |
| Cₕ7b | 1nF 63V MKT |
| Rₓ7b | 100Ω |
| MDC1000 (Motorola) | |
| ZDₜ7b | BZX 85 / C 12 (12V) |

| Fig. 7c: | |
|---|---|
| C_{t_a}7c / C_{t_b}7c | 6,8nF 63V MKT |
| R_{t_a}7c / R_{t_b}7c | 15kΩ |
| R_{x_a}7c / R_{x_b}7c | 100Ω |
| D_{y_a}7c / D_{y_b}7c | 1N4148 |
| T_{y_a}7c / T_{y_b}7c | BC556B |
| T_{x_a}7c / T_{x_b}7c | BC546B |
| R_{y_a}7c / R_{y_b}7c | 5,1kΩ |
| ZD_{t_a}7c / ZD_{t_b}7c | BZX 85 / C 12 (12V) |
| Lᵣₑₛ7c | 3mH EF16 |
| C_{c_a}7c / C_{c_b}7c | 100nF 250V MKT |
| Cᵣₑₛ7c | 6,8nF 1000V MKP |
| C_{sec}7c | 6,8nF 500V MKT |

| Fig. 7d: | |
|---|---|
| Cₜ7d | 4,7nF 63V MKT |
| (Rₜ7d | 15kΩ - im MDC1000 enthalten) |
| Rₓ7d | 100Ω |
| MDC1000 (Motorola) | |
| ZDₜ7d | BZX 85 / C 12 (12V) |

| Fig. 8: | |
|---|---|
| R_{t_a}8 / R_{t_b}8 | 680Ω |
| C_{t_a}8 / C_{t_b}8 | 6,8nF 63V MKT |
| ZD_{z_a}8 / ZD_{z_b}8 | BZX 85 / C 12 (12V) |
| R_{z_a}8 / R_{z_b}8 | 10Ω |
| ZD_{t_a}8 / ZD_{t_b}8 | BZX 85 / C 15 (15V) |
| Lᵣₑₛ8 | 3mH EF16 |
| Cᵣₑₛ8 | 3,3nF 1000V MKP |
| C_{c}8 | 47nF 400V MKT |
| C_{sec}8 | 3,3nF 1000V MKP |

| Fig. 9: | |
|---|---|
| R_{t_a}9 / R_{t_b}9 | 680Ω |
| C_{t_a}9 / C_{t_b}9 | 6,8nF 63V MKT |
| R_{f_a}9 / R_{f_b}9 | 3,3Ω |
| ZD_{t_a}9 / ZD_{t_b}9 | BZX 85 / C 15 (15V) |
| Lᵣₑₛ9 | 3mH EF16 |
| Cᵣₑₛ9 | 6,8nF 1000V MKP |
| C_{c}9 | 47nF 400V MKT |

| Fig. 10: | |
|---|---|
| R_{b_a}10 / R_{b_b}10 | 33Ω |
| R_{e_a}10 / R_{e_b}10 | 3,3Ω |
| D_{e_a}10 / D_{e_b}10 | BA157GP |
| Lᵣₑₛ10 | 2,5mH EF16 |
| Cᵣₑₛ10 | 6,8nF 1000V MKP |
| C_{c}10 | 47nF 400V MKT |
| C_{sec}10 | 3,3nF 1000V MKP |

| Fig. 11: | |
|---|---|
| Rₛ11 | 680kΩ |
| R_{pd}11 | 330kΩ |
| R_{b_a}11 / R_{b_b}11 | 33Ω |
| R_{e_a}11 / R_{e_b}11 | 3,3Ω |
| D_{e_a}11 / D_{e_b}11 | BA157GP |
| D_{f_a}11 / D_{f_b}11 | BA157GP |
| ZD_{f_a}11 / ZD_{f_b}11 | BZX 55 / C 5V1 (5,1V) |
| Lᵣₑₛ11 | 2,5mH EF16 |
| C_{c}11 | 47nF 400V MKT |
| D_{WH}11 / D_{WL}11 | BA157GP |
| C_{sec}11 | 10nF 1000V MKP |

| Fig. 12: | |
|---|---|
| L_{filter} 12 | 2,2mH SIEMENS-LBC (large bobbin core) |
| R_{b_a}12 / R_{b_b}12 | 22Ω |
| L_{t_a}12 / L_{t_b}12 | 100µH SIEMENS-BC (bobbin core) |
| R_{p_a}12 / R_{p_b}12 | 330Ω |
| R_{e_a}12 / R_{e_b}12 | 2,2Ω |
| D_{f_a}12 / D_{f_b}12 | BA157GP |
| ZD_{f_a}12 / ZD_{f_b}12 | BZX 55 / C 5V1 (5,1V) |
| Lᵣₑₛ12 | 3,5mH EF16 |
| C_{c}12 | 47nF 400V MKT |
| C_{sec}12 | 10nF 1000V MKP |

| Fig. 13: | |
|---|---|
| R_{DIAC}13 | 22Ω |
| R_{b_a}13 / R_{b_b}13 | 22Ω |
| L_{t_a}13 / L_{t_b}13 | 220µH SIEMENS-BC (bobbin core) |
| R_{p_a}13 / R_{p_b}13 | 220Ω |
| R_{e_a}13 / R_{e_b}13 | 4,3Ω |
| D_{t_a}13 / D_{t_b}13 | 1N4148 |
| ZD_{t_a}13 / ZD_{t_b}13 | BZX 55 / C 4V3 (4,3V) |
| Lᵣₑₛ13 | 3,5mH EF16 |
| C_{c}13 | 47nF 400V MKT |
| C_{sec}13 | 10nF 1000V MKP |

| Fig. 14: | |
|---|---|
| R_{b_a}14 / R_{b_b}14 | 22Ω |
| L_{t_a}14 / L_{t_b}14 | 100µH SIEMENS-BC (bobbin core) |
| R_{p_a}14 / R_{p_b}14 | 330Ω |
| R_{e_a}14 / R_{e_b}14 | 2,2Ω |
| D_{f_a}14 / D_{f_b}14 | BA157GP |
| D_{t_a}14 / D_{t_b}14 | 1N4148 |
| ZD_{t_a}14 / ZD_{t_b}14 | BZX 55 / C 6V8 (6,8V) |
| D_{c_a}14 / D_{c_b}14 | BA157GP |
| Lᵣₑₛ14 | 3,5mH EF16 |
| C_{c}14 | 47nF 400V MKT |
| C_{sec}14 | 10nF 1000V MKP |

Die Dimensionierung der Steuerbauelemente muß nicht zwangsläufig für Tₐ und T_{b} gleich sein. In den hier gezeigten Anwendungen ist jedoch ein Tastverhältnis von 50% günstig, weshalb für Tₐ und T_{b} die gleiche Ansteuerauslegung gewählt wurde.

## Patentansprüche

1. Schaltung zum Betreiben einer Last mit mindestens einem Leistungsschaltelement (T) mit antiparalleler Freilaufstrecke, durch die während einer Freilaufphase ein bezüglich dem leitenden Zustand des Schaltelements antiparalleler Freilaufstrom fließen kann, **dadurch gekennzeichnet, daß** nach dem anfänglichen Start der Schaltung in ihren Betriebszustand die Energie zum Steuern des Schaltelements (T) in seinen eingeschalteten Zustand unter Verwendung des Freilaufstroms gewonnen wird.

2. Schaltung nach Anspruch 1, **dadurch gekennzeichnet, daß** die Schaltung ein elektronisches Vorschaltgerät (EVG) zum Betreiben einer Lampe ist, vorzugsweise einer Niederdruckentladungslampe, vorzugsweise im Leistungsbereich bis zu einigen zehn Watt.

3. Schaltung nach Anspruch 1 bis 2, **dadurch gekennzeichnet, daß** in die Freilaufstrecke ein Bauelement oder eine Baugruppe eingefügt ist, über dem oder der der Freilaufstrom einen Spannungsabfall erzeugt, welcher in einem Steuerenergiespeicherelement die Energie zum Steuern des Leistungsschaltelements bereitstellt.

4. Schaltung nach Anspruch 3, **dadurch gekennzeichnet, daß** das in die Freilaufstrecke eingefügte Bauelement eine Zenerdiode (Zdₜ) ist.

5. Schaltung nach einem der Ansprüche 2 bis 4, **dadurch gekennzeichnet, daß** eine Halbbrückenschaltung mit einem Resonanzkreis, bestehend aus einer Leistungsdrossel (Lᵣₑₛ) und mindestens einer direkt oder mittelbar zur Lampe parallelen Resonanzkapazität (Cᵣₑₛ), verwendet wird.

6. Schaltung nach einem der Ansprüche 3 bis 5, **dadurch gekennzeichnet, daß** das Leistungsschaltelement ein spannungsgesteuertes Bauelement, etwa ein FET, ist und die Spannungsstoßfunktion, welche von dem in die zugeordnete Freilaufstrecke eingefügten Bauelement oder der Baugruppe während der Freilaufphase gebildet wird, über eine Diode (Dₜ) in einem Kondensator (Cₜ) zwischengespeichert wird und dieser Kondensator direkt oder über weitere Bauelemente mit dem Gate des Leistungsschaltelements verbunden ist und dieser Kondensator über eine Entladeschaltung nach Ablauf der Freilaufphase wieder entladen und dadurch die Einschaltdauer des Leistungsschalters festgelegt wird.

7. Schaltung nach Anspruch 6, **dadurch gekennzeichnet, daß** zur Entladung des Kondensators (Cₜ) ein Widerstand (Rₜ) verwendet wird.

8. Schaltung nach Anspruch 6, **dadurch gekennzeichnet, daß** zur Entladung des Kondensators (Cₜ) eine Drossel (Lₜ) und ein Bauelement, etwa ein Widerstand (Rₜ), oder eine Baugruppe zur Bedämpfung des Schwingkreises bestehend aus dem Kondensator (Cₜ) und der Drossel (Lₜ), benutzt werden.

9. Schaltung nach Anspruch 6, **dadurch gekennzeichnet, daß** zur Entladung des Kondensators (Cₜ) eine Konstantstromsenke benutzt wird.

10. Schaltung nach Anspruch 6, **dadurch gekennzeichnet, daß** zur Entladung des Kondensators (Cₜ) eine Entladeschaltung mit umschaltbarer Zeitkonstante verwendet wird, wobei die Entladung zunächst hochohmig und dann - ab einer festgelegten Spannungsschwelle - deutlich niederohmiger erfolgt.

11. Schaltung nach Anspruch 7, **dadurch gekennzeichnet, daß** der Kondensator (Cₜ) über eine zusätzliche Baugruppe in Serie unterhalb einer bestimmten Spannungsschwelle abgekoppelt und nicht voll entladen wird.

12. Schaltung nach einem der Ansprüche 6 bis 11, **dadurch gekennzeichnet, daß** durch eine Zusatzbeschaltung aus einer Aufladediode (Dₛ) zwischen dem Gate des Leistungsschaltelements (T) und dem Kondensator (Cₜ), einem Widerstand zwischen der kondensatorseitigen Seite der Aufladediode und der Basis eines Transistors (Tₛ), dessen Emitter zum Gate und dessen Kollektor zur Source geschaltet ist, die Abschaltung des Leistungsschaltelements beschleunigt wird.

13. Schaltung nach Anspruch 7, **dadurch gekennzeichnet, daß** der Kondensator (Cₜ) und sein paralleler Entladewiderstand (Rₜ) über mindestens eine Diode (ZDₓ) vom Gate des Leistungsschaltelements (T) entkoppelt wird, wodurch das Gate auf die Spitzenspannung des Kondensators (Cₜ) minus der Flußspannung der Diode aufgeladen wird, eine anschließende Entladung des Gates mit der Entladung des Kondensators (Cₜ) jedoch so lange durch die nun sperrende Diode verhindert wird, bis eine Thyristor-Struktur gezündet wird, die den Kondensator (Cₜ) und die Eingangskapazität des Leistungsschaltelements (T) schnell entlädt, und somit am Gate eine nahezu rechteckförmige Steuerspannung erzeugt wird.

14. Schaltung nach einem der Ansprüche 1 bis 13, **dadurch gekennzeichnet, daß** in Serie zu einer Zenerdiode (ZD_{z}) in der Freilaufstrecke ein zusätzlicher Widerstand (R_{z}) eingefügt wird.

15. Schaltung nach Anspruch 14, **dadurch gekennzeichnet, daß** dieser Widerstand (R_{z}), vorzugsweise die gesamte Reihenschaltung aus diesem Widerstand und der Zenerdiode (ZD_{z}), durch eine zusätzliche Diode (ZDₜ) überbrückt wird.

16. Schaltung nach Anspruch 15, **dadurch gekennzeichnet, daß** diese zusätzliche Diode als Zenerdiode (ZDₜ) ausgebildet ist.

17. Schaltung nach einem der vorgenannten Ansprüche, **dadurch gekennzeichnet, daß** in einen Source- oder Emitteranschluß eines Leistungsschaltelements (T) ein Gegenkopplungswiderstand (R_{f}) eingefügt wird.

18. Schaltung nach einem der Ansprüche 1 bis 5 und 14 bis 17, **dadurch gekennzeichnet, daß** das Leistungsschaltelement (T) ein bipolarer Transistor ist, der durch den Freilaufstrom direkt oder mittelbar eingeschaltet wird und dessen Einschaltdauer bestimmt ist durch seine Ladungsträgerspeicherzeit oder einen in einer Steuerdrossel (Lₜ) eingeprägten, nach der Freilaufphase abnehmenden Steuerstrom oder aber aus einer Kombination aus Speicherzeit und Steuerstrom.

19. Schaltung nach Anspruch 18, **dadurch gekennzeichnet, daß** der Freilaufstrom über einen basisseitigen Widerstand (R_{b}) und die Basis-Kollektordiode des bipolaren Transistors (T) fließen kann, wodurch der Transistor so mit Ladungsträgern überschwemmt wird, daß er - auch ohne Basisansteuerung nach der Freilaufphase - über seine Ladungsträgerspeicherzeit noch einige µs geöffnet bleibt und einen Kollektor-Emitterstrom zuläßt, bis er abschaltet.

20. Schaltung nach Anspruch 19, **dadurch gekennzeichnet, daß** eine Freilaufdiode (D_{f}) mit einer antiseriellen Zenerdiode (ZD_{f}) parallel zum Transistor (T) geschaltet wird, wodurch ein Teil des Freilaufstromes über diese in der Durchflußspannung erhöhte Freilaufstrecke abfließt und ein zweiter, dadurch konstant gehaltener Teil die Basis-Kollektor-Diode überschwemmt.

21. Schaltung nach Anspruch 19 oder 20, **dadurch gekennzeichnet, daß** zusätzlich zum Basiswiderstand (R_{b}) eine Parallelschaltung aus einer Steuerdrossel (Lₜ) und einem Bedämpfungswiderstand (Rₚ) in die Basiszuleitung des bipolaren Transistors (T) eingefügt wird.

22. Schaltung nach Anspruch 21, jedoch nicht 20, **dadurch gekennzeichnet, daß** parallel zu der Reihenschaltung aus dem Basiswiderstand (R_{b}) und der Parallelschaltung aus dem Bedämpfungswiderstand (Rₚ) und der Steuerdrossel (Lₜ) eine Reihenschaltung aus mehreren Dioden oder einer Zenerdiode (ZDₜ) und einer antiseriellen Diode (Dₜ) geschaltet wird, so daß während der Freilaufphase die negative Spannung an der Basis-Emitterstrecke des bipolaren Transistors (T) und dadurch auch die Spannung, die den Stromanstieg in der Steuerdrossel (Lₜ) während der Freilaufphase festlegt, limitiert wird.

23. Schaltung nach einem der Ansprüche 18 bis 22, **dadurch gekennzeichnet, daß** bei Verwendung einer Halbbrücke mit zwei bipolaren Transistoren (T) von der Basis des pluspotentialseitigen Transistors zum Pluspotential und von der Basis des minusseitigen Transistors zum Mittenpunkt der Halbbrücke jeweils eine Freilaufdiode (D_{f}) geschaltet wird, die zumindest einen Teil des Freilaufstromes übernimmt, der ohne diese Diode ganz durch die Basis-Kollektordiode fließen würde.

24. Schaltung nach Anspruch 23, **dadurch gekennzeichnet, daß** in die Kollektorzuleitung jedes der beiden bipolaren Transistoren (T) ein Bauteil (D_{c}) oder eine Baugruppe eingefügt wird, das oder die über seinen bzw. ihren Spannungsabfall während der Freilaufphase die Bestromung der Basis-Kollektordiode zugunsten des über die Freilaufdiode (D_{f}) abfließenden Anteils vermindert.

25. Schaltung nach Anspruch 24, **dadurch gekennzeichnet, daß** das Bauteil in Serie zum Kollektor eine Diode (D_{c}) ist.

26. Schaltung nach einem der vorgenannten Ansprüche, **dadurch gekennzeichnet, daß** der erstmalige Anstoß zum Start einer freischwingenden Oszillation der Schaltung in ihrem Betriebszustand nach dem Anlegen einer Versorgungsspannung generiert wird durch einen DIAC, dessen einer Anschluß direkt oder mittelbar zum Gate oder zur Basis eines Leistungsschaltelements (T) verbunden ist und dessen anderer Anschluß mit einem Startkondensator (Cₛ) verbunden ist, der hochohmig aus der Versorgungsspannung geladen wird, und der nach Start der Oszillation über eine Entladediode (D_{dis}) und die Schaltstrecke des angestoßenen Leistungsschaltelements immer wieder entladen wird, so daß sich im Betrieb keine zur Zündung des DIACs ausreichende Spannung mehr über ihm aufbauen kann, wobei in Reihe zur Entladediode vorzugsweise ein Widerstand (Rₗᵢₘᵢₜ) angeordnet wird, mit dem die Zeitdauer des erstmaligen Anstoßes beeinflußt werden kann, und in Reihe zum DIAC ein weiterer Widerstand eingefügt werden kann, mit dem die Höhe des Strompulses begrenzbar ist.

## Claims

1. Circuit for operating a load, having at least one power-switching element (T) with an anti-parallel freewheeling section through which it is possible for a freewheeling current which is anti-parallel relative to the conducting state of the switching element to flow during a freewheeling phase, **characterized in that** after the initial start of the circuit into its operating state the energy is obtained for the purpose of controlling the switching element (T) in its switched-on state by using the freewheeling current.

2. Circuit according to Claim 1, **characterized in that** the circuit is an electronic ballast (EB) for operating a lamp, preferably a low-pressure discharge lamp, preferably in the power range up to a few tens of Watts.

3. Circuit according to Claims 1 to 2, **characterized in that** inserted into the freewheeling section is a component or a module across which the freewheeling current generates a voltage drop which provides in a control energy storage element the energy for controlling the power-switching element.

4. Circuit according to Claim 3, **characterized in that** the component inserted into the freewheeling section is a Zener diode (Zdₜ).

5. Circuit according to one of Claims 2 to 4, **characterized in that** use is made of a half-bridge circuit having a resonant circuit, comprising a power inductor (Lᵣₑₛ) and at least one resonance capacitor (Cᵣₑₛ) which is directly or indirectly parallel with the lamp.

6. Circuit according to one of Claims 3 to 5, **characterized in that** the power-switching element is a voltage-controlled component, for example an FET, and the voltage impulse function, which is formed during the freewheeling phase by the component or the module inserted into the assigned freewheeling section, is buffered via a diode (Dₜ) in a capacitor (Cₜ), and said capacitor is connected directly or via further components to the gate of the power-switching element, and said capacitor is discharged again via a discharge circuit after expiry of the freewheeling phase, and the ON duration of the circuit-breaker is defined thereby.

7. Circuit according to Claim 6, **characterized in that** a resistor (Rₜ) is used to discharge the capacitor (Cₜ).

8. Circuit according to Claim 6, **characterized in that** to discharge the capacitor (Cₜ) use is made of an inductor (Lₜ) and a component, for example a resistor (Rₜ), or a module for damping the resonant circuit comprising the capacitor (Cₜ) and the inductor (Lₜ).

9. Circuit according to Claim 6, **characterized in that** a constant-current sink is used to discharge the capacitor (Cₜ).

10. Circuit according to Claim 6, **characterized in that** a discharge circuit with a switchable time constant is used to discharge the capacitor (Cₜ), the discharging being performed initially in a high-resistance fashion and then - starting from a defined voltage threshold - in a substantially lower-resistance fashion.

11. Circuit according to Claim 7, **characterized in that** below a specific voltage threshold the capacitor (Cₜ) is decoupled via an additional module in series and is not fully discharged.

12. Circuit according to one of Claims 6 to 11, **characterized in that** switching off the power-switching element is accelerated by an additional circuit comprising a charging diode (Dₛ) between the gate of the power-switching element (T) and the capacitor (Cₜ), a resistor between the capacitor-side of the charging diode and the base of a transistor (Tₛ₎ whose emitter is connected to the gate and whose collector is connected to the source.

13. Circuit according to Claim 7, **characterized in that** the capacitor (Cₜ) and its parallel discharge resistor (Rₜ) are decoupled from the gate of the power-switching element (T) via at least one diode (ZDₓ), as a result of which the gate is charged to the peak voltage of the capacitor (Cₜ) minus the forward voltage of the diode, but subsequent discharging of the gate with the discharging of the capacitor (Cₜ) is prevented by the now blocking diode until a thyristor structure is fired which rapidly discharges the capacitor (Cₜ) and the input capacitance of the power-switching element (T), and a virtually square-wave control voltage is thereby generated at the gate.

14. Circuit according to one of Claims 1 to 13, **characterized in that** an additional resistor (R_{z}) is inserted in series with a Zener diode (ZD_{z}) in the freewheeling section.

15. Circuit according to Claim 14, **characterized in that** this resistor (R_{z}), preferably the entire series circuit composed of this resistor and the Zener diode (ZD_{z}), is short-circuited by an additional diode (ZDₜ).

16. Circuit according to Claim 15, **characterized in that** said additional diode is constructed as a Zener diode (ZDₜ).

17. Circuit according to one of the preceding claims, **characterized in that** a negative-feedback resistor (R_{f}) is inserted into a source terminal or emitter terminal of a power-switching element (T).

18. Circuit according to one of Claims 1 to 5 and 14 to 17, **characterized in that** the power-switching element (T) is a bipolar transistor which is turned on directly or indirectly by the freewheeling current and whose ON duration is determined by its charge-carrier storage time or by a control current which is impressed in a control inductor (Lₜ) and decreases after the freewheeling phase, or else by a combination of storage time and control current.

19. Circuit according to Claim 18, **characterized in that** the freewheeling current can flow via a base-side resistor (R_{b}) and the base-collector diode of the bipolar transistor (T), as a result of which the transistor is flooded with charge carriers such that - even without the base being driven after the freewheeling phase - it still remains open for a few µs in excess of its charge-carrier storage time, and permits a collector-emitter current until it is turned off.

20. Circuit according to Claim 19, **characterized in that** a freewheeling diode (D_{f}) with an anti-serial Zener diode (ZD_{f}) is connected in parallel with the transistor (T), as a result of which a portion of the freewheeling current flows off via this freewheeling section, which has an increased forward voltage, and a second portion, which is thereby held constant, floods the base-collector diode.

21. Circuit according to Claim 19 or 20, **characterized in that** in addition to the base resistor (R_{b}), a parallel circuit composed of a control inductor (Lₜ) and a damping resistor (Rₚ) is inserted into the base supply lead of the bipolar transistor (T).

22. Circuit according to Claim 21, but not 20, **characterized in that** a series circuit composed of a plurality of diodes or a Zener diode (ZDₜ) and an anti-serial diode (Dₜ) is connected in parallel with the series circuit composed of the base resistor (R_{b}) and the parallel circuit composed of the damping resistor (Rₚ) and the control inductor (Lₜ) so that during the freewheeling phase the negative voltage across the base-emitter junction of the bipolar transistor (T), and thus also the voltage which defines the current rise in the control inductor (Lₜ) during the freewheeling phase, are limited.

23. Circuit according to one of Claims 18 to 22, **characterized in that** when use is made of'a half bridge with two bipolar transistors (T) there is connected in each case from the base of the transistor on the positive potential side to the positive potential, and from the base of the transistor on the negative side to the centre point of the half bridge a freewheeling diode (D_{f}) which accepts at least a portion of the freewheeling current which without this diode would flow entirely through the base-collector diode.

24. Circuit according to Claim 23, **characterized in that** inserted into the collector supply lead of each of the two bipolar transistors (T) is an assembly (D_{c}) or a module which, during the freewheeling phase, via its voltage drop reduces the current flowing through the base-collector diode in favour of the fraction flowing off via the freewheeling diode (D_{f}).

25. Circuit according to Claim 24, **characterized in that** the assembly in series with the collector is a diode (D_{c}).

26. Circuit according to one of the preceding claims, **characterized in that** after the application of a supply voltage the initial impetus for starting freerunning oscillation of the circuit in its operating state is generated by a DIAC, one terminal of which is connected directly or indirectly to the gate or to the base of a power-switching element (T), and the other terminal of which is connected to a starting capacitor (Cₛ), which is charged from the supply voltage in a high-resistance fashion and which, after the start of the oscillation, is always discharged again via a discharge diode (D_{dis}) and the switching junction of the activated power-switching element, with the result that it is no longer possible during operation for a voltage sufficient to fire the DIAC to build up across it, there preferably being arranged in series with the discharge diode a resistor (Rₗᵢₘᵢₜ) by means of which the duration of the initial impetus can be influenced, and it being possible to insert in series with the DIAC a further resistor by means of which the level of the current pulse can be limited.

## Revendications

1. Circuit d'alimentation d'une charge, comprenant au moins un élément (T) de commutation de puissance à section de roue libre qui est montée tête-bêche et par laquelle il peut passer pendant une phase de roue libre un courant de roue libre antiparallèle par rapport à l'état passant de l'élément de commutation, **caractérisé en ce qu'**après le démarrage initial du circuit, dans son état de fonctionnement l'énergie pour mettre l'élément (T) de commutation dans son état passant est obtenue en utilisant le courant de roue libre.

2. Circuit suivant la revendication 1, **caractérisé en ce que** le circuit est un ballast électronique (BE) d'alimentation d'une lampe, de préférence d'une lampe à décharge basse tension, de préférence dans la plage de puissance allant jusqu'à quelques dizaines de watts.

3. Circuit suivant la revendication 1 à 2, **caractérisé en ce qu'**il est inséré dans la section de roue libre un composant ou un module par lequel le courant de roue libre produit une chute de tension qui met l'énergie de commande de l'élément de commutation de puissance à disposition dans un élément d'emmagasinage de l'énergie de commande.

4. Circuit suivant la revendication 3, **caractérisé en ce que** le composant inséré dans la section de roue libre est une diode (Zdₜ) de Zener.

5. Circuit suivant l'une des revendications 2 à 4, **caractérisé en ce qu'**il est utilisé un montage en demi-pont ayant un circuit de résonance constitué d'une bobine (Lᵣₑₛ) de puissance et d'au moins une capacité (Cᵣₑₛ) de résonance en parallèle directement ou par l'intermédiaire de la lampe.

6. Circuit suivant l'une des revendications 3 à 5, **caractérisé en ce que** l'élément de commutation de puissance est un composant commandé par la tension, par exemple un FET, et la fonction de surtension transitoire qui est formée par le composant ou par le module inséré dans la section de roue libre associée pendant la phase de roue libre est emmagasinée temporairement par l'intermédiaire d'une diode (Dₜ) dans un condensateur (Cₜ) et ce condensateur est relié directement ou par l'intermédiaire d'autres composants à la grille de l'élément de commutation de puissance et ce condensateur est redéchargé par l'intermédiaire d'un circuit de décharge après que la phase de roue libre s'est écoulée et la durée de mise à l'état passant du commutateur de puissance est ainsi fixée.

7. Circuit suivant la revendication 6, **caractérisé en ce qu'**il est utilisé pour la décharge du condensateur (Cₜ) une résistance (Rₜ).

8. Circuit suivant la revendication 6, **caractérisé en ce qu'**il est utilisé pour la décharge du condensateur (Cₜ) une bobine (Lₜ) et un composant, par exemple une résistance (Rₜ), ou un module d'amortissement du circuit oscillant constitué du condensateur (Cₜ) et de la bobine (Lₜ).

9. Circuit suivant la revendication 6, **caractérisé en ce qu'**il est utilisé pour la décharge du condensateur (Cₜ) un puits de courant constant.

10. Circuit suivant la revendication 6, **caractérisé en ce que** pour la décharge du condensateur (Cₜ) il est utilisé un circuit de décharge ayant des constantes de temps commutables, la décharge s'effectuant d'abord à haute valeur ohmique puis, après un seuil de tension fixé, nettement à basse valeur ohmique.

11. Circuit suivant la revendication 7, **caractérisé en ce que** le condensateur (Cₜ) est découplé par l'intermédiaire d'un module supplémentaire en série en-dessous d'une tension de seuil déterminé et n'est pas déchargé entièrement.

12. Circuit suivant l'une des revendications 6 à 11, **caractérisé par** un circuit supplémentaire constitué d'une diode (Dₛ) de charge, entre la grille de l'élément (T) de commutation de puissance et le condensateur (Cₜ), et d'une résistance entre le côté se trouvant vers le condensateur de la diode de charge et la base d'un transistor (Tₛ), dont l'émetteur est relié à la grille et dont le collecteur est relié à la source et qui accélère la mise à l'état non passant de l'élément de commutation de puissance.

13. Circuit suivant la revendication 7, **caractérisé en ce que** le condensateur (Cₜ) et sa résistance (Rₜ) de décharge en parallèle est découplé par au moins une diode (ZDₓ) de la grille de l'élément (T) de commutation de puissance, en sorte que la grille est chargée à la tension de crête du condensateur (Cₜ) moins la tension directe de la diode, une décharge ultérieure de la grille par la décharge du condensateur (Cₜ) étant cependant empêchée par la diode maintenant bloquante jusqu'à l'amorçage d'une structure de thyristor qui décharge rapidement le condensateur (Cₜ) et la capacité d'entrée de l'élément (T) de commutation de puissance et produit ainsi à la grille une tension de commande presque rectangulaire.

14. Circuit suivant l'une des revendications 1 à 13, **caractérisé en ce qu'**il est inséré en série avec une diode (ZD_{z}) de Zener dans la section de roue libre une résistance (R_{z}) supplémentaire.

15. Circuit suivant la revendication 14, **caractérisé en ce que** cette résistance (R_{z}) et de préférence tout le circuit série constitué de cette résistance et de la diode (ZD_{z}) Zener est shunté par une diode (ZDₜ) supplémentaire.

16. Circuit suivant la revendication 15, **caractérisé en ce que** cette diode supplémentaire est constituée en diode (ZDₜ) de Zener.

17. Circuit suivant l'une des revendications précédentes, **caractérisé en ce qu'**il est inséré dans une borne de source ou dans une borne d'émetteur d'un élément (T) de commutation de puissance une résistance (R_{f}) de réaction.

18. Circuit suivant l'une des revendications 1 à 5 et 14 à 17, **caractérisé en ce que** l'élément (T) de commutation de puissance est un transistor bipolaire qui est mis à l'état passant directement ou indirectement par le courant de roue libre et dont la durée de mise à l'état passant est déterminée par sa durée d'emmagasinage de porteurs de charge ou par un courant de commande injecté dans une bobine (Lₜ) de commande et décroissant après la phase de roue libre ou à partir d'une combinaison d'une durée d'emmagasinage et d'un courant de commande.

19. Circuit suivant la revendication 18, **caractérisé en ce que** le courant de roue libre peut passer dans une résistance (R_{b}) du côté de la base et dans la diode base-collecteur du transistor (T) bipolaire en sorte que le transistor est submergé de porteurs de charge, de sorte qu'il reste ouvert encore quelques µs, même sans commande de la base après la phase de roue libre par sa durée d'emmagasinage de porteurs de charge et autorise un courant collecteur-émetteur, jusqu'à ce qu'il devienne non passant.

20. Circuit suivant la revendication 19, **caractérisé en ce qu'**une diode (Dₜ) de roue libre avec une diode (ZD_{f}) de Zener antisérielle est montée en parallèle au transistor (T) en sorte qu'une partie de courant de roue libre passe par celui-ci dans la section de roue libre à tension de passage plus élevée et qu'une seconde partie maintenue ainsi constante submerge la diode base-collecteur.

21. Circuit suivant la revendication 19 ou 20, **caractérisé en ce qu'**en plus de la résistance (R_{b}) de base il est inséré un circuit parallèle constitué d'une bobine (Lₜ) de commande et d'une résistance (Rₚ) d'amortissement dans la ligne de base du transistor (T) bipolaire.

22. Circuit suivant la revendication 21, mais non suivant la revendication 20, **caractérisé en ce qu'**il est monté, en parallèle au circuit série constitué de la résistance (R_{b}) de base et du circuit parallèle constitué de la résistance (Rₚ) d'amortissement et de la bobine (Lₜ) de commande, un circuit série constitué de plusieurs diodes ou d'une diode (ZDₜ) de Zener et d'une diode (Dₜ) antisérie, de sorte que pendant la phase de roue libre la tension négative appliquée à la section base-émetteur du transistor (T) bipolaire et donc également la tension qui fixe l'augmentation du courant dans la bobine (Lₜ) de commande pendant la phase de roue libre est limitée.

23. Circuit suivant l'une des revendications 18 à 22, **caractérisé en ce que**, lorsque l'on utilise un demi-pont ayant deux transistors (T) bipolaires, il est monté de la base du transistor du côté du potentiel positif au potentiel positif et de la base du transistor du côté négatif au point médian du demi-pont, respectivement une diode (D_{f}) de roue libre qui absorbe au moins une partie du courant de roue libre qui s'écoulerait, sans cette diode, entièrement dans la diode base-collecteur.

24. Circuit suivant la revendication 23, **caractérisé en ce que** dans la ligne de collecteur de chacun des deux transistors (T) bipolaires est inséré un élément (D_{c}) ou un module qui empêche par sa chute de tension pendant la phase de roue libre l'alimentation de la diode base-collecteur en faveur de la partie passant par la diode (D_{f}) de roue libre.

25. Circuit suivant la revendication 24, **caractérisé en ce que** l'élément monté en série au collecteur est une diode (D_{c}).

26. Circuit suivant l'une des revendications précédentes, **caractérisé en ce que** la surtension transitoire pour la première fois, pour le démarrage d'une oscillation libre du circuit dans son état de fonctionnement, est engendrée, après l'application d'une tension d'alimentation, par un DIAC dont une borne est reliée directement ou indirectement à la grille ou à la base d'un élément (T) de commutation de puissance et dont l'autre borne est reliée à un condensateur (Cₛ) de démarrage, qui est chargé à grande valeur ohmique à partir de la tension d'alimentation et qui, après le démarrage de l'oscillation, est toujours redéchargé par une diode (D_{dis}) de décharge et par la section de commutation de l'élément de commutation de puissance ayant subi une surtension transitoire, de sorte qu'en fonctionnement il ne peut plus se former une tension suffisante à l'amorçage du DIAC par son intermédiaire, dans lequel il est monté en série à la diode de décharge de préférence une résistance (Rₗᵢₘᵢₜ) par laquelle la durée de la surtension transitoire pour la première fois peut être influencée et il peut être inséré en série avec le DIAC une autre résistance par laquelle l'amplitude de l'impulsion du courant peut être limitée.
